# EUROPEAN PATENT SPECIFICATION

(11) **EP 3 509 866 B1**
(45) Date of publication and mention of the grant of the patent: **06.01.2021**
(21) Application number: 17767887.7
(22) Date of filing: 06.09.2017
(51) Int. Cl.: B42D 25/36, B42D 25/29, B42D 25/324, B42D 25/21, B42D 25/328

(54) **SECURITY DEVICES AND METHODS OF MANUFACTURE THEREOF**
SICHERHEITSVORRICHTUNGEN UND VERFAHREN ZUR HERSTELLUNG DAVON
DISPOSITIFS DE SÉCURITÉ ET LEURS PROCÉDÉS DE FABRICATION

(30) Priority: 08.09.2016 GB 201615258
(43) Date of publication of application: 17.07.2019
(73) Proprietor: Hueck Folien Gesellschaft m.b.H., 4342 Baumgartenberg (AT)
(72) Inventor: FOURNIER, Frederic, Thatcham RG18 3AT (GB); HOLMES, Brian William, Fleet Hampshire GU51 5HZ (GB)
(74) Representative: Ofner, Clemens
(86) International application number: PCT/GB2017/052599
(87) International publication number: WO 2018/046915

(56) References cited:
- EP-A2- 1 780 040
- WO-A1-01/03945
- US-A1- 2007 273 142

## Description

### FIELD OF THE INVENTION

The present invention relates to security devices suitable for use in security documents such as banknotes, identity documents, passports, certificates and the like, as well as methods for manufacturing such security devices.

### DESCRIPTION OF THE RELATED ART

To prevent counterfeiting and enable authenticity to be checked, security documents are typically provided with one or more security devices which are difficult or impossible to replicate accurately with commonly available means, particularly photocopiers, scanners or commercial printers. One type of security device known in the art is one which uses a colour-shifting structure to produce an optically variable effect that is difficult to counterfeit.

A colour-shifting structure typically comprises at least a reflector layer and an absorber layer separated by an optical spacer layer. Interference between light reflecting from the reflector layer and the absorber layer causes the structure to have a coloured appearance, when viewed in reflection, which changes upon tilting as the optical path length between these layers changes depending on the viewing angle. The colours which result from this interference depend on the thickness of the optical spacer layer, which in part determines the optical path difference between light reflecting from the reflector layer and the absorber layer.

In order to produce a security device whose colour-shifting structure exhibits a particular colour-shift in reflection, it is common to precisely configure the thickness in which the structure is formed. Having precise control of the thickness in which a colour-shifting structure is formed and providing the means to produce a range of thicknesses to allow design freedom results in complex methods of manufacture.

A method of providing a colour-shifting structure is known from EP 2538247 A2, in which a substrate with recesses is coated with a colour-shifting structure and the recesses filled with the colour-shifting structure. Since the colour exhibited by the colour-shifting structure depends on its thickness, the colour exhibited by the colour-shifting structure in the recesses is dependent upon the depth of the recesses, allowing for different colours to be exhibited by the different recesses and the areas between the recesses.

A known method of producing a colour-shifting device may be found in EP 1780040 A2, and a known method of reducing colour shift can be found in US 2007/273142 A1.

It is desirable to provide new methods of producing colour-shifting structures which allow improved control over those known in the art.

### SUMMARY OF THE INVENTION

In accordance with a first aspect of the present invention, there is provided a method of producing a security device, comprising: providing a substrate having a relief structure in or on its surface, the relief structure being provided in a first region of the substrate, the relief structure in the first region having a first recess or a plurality of first recesses in or on the surface of the substrate, the first recess or recesses being recessed with respect to one or more corresponding first land areas of the first region in or on the surface of the substrate; and applying a coating of a colour-shifting structure (referred to as a "colour-shifting coating structure") to the relief structure such that it is received in the first recess or recesses of the first region and on the one or more first land areas and such that a thickness of the coating of the colour-shifting structure in the first recess or recesses is greater than or less than a thickness of the coating of the colour-shifting structure on the one or more first land areas.

The present inventors have discovered that a colour-shifting coating structure may be applied over a relief structure comprising one or more first recesses such that the colour-shifting structure does not entirely conform to the relief structure to which it is applied, and such that the colour-shifting structure has a greater or smaller average thickness in the recesses of the relief structure than on the lands of the relief structure, thereby providing a means of controlling the final colour-shift effect produced by the device. Specifically, it has been found that it is possible to harness inefficient filling of the recesses of the relief structure by the colour-shifting coating structure, which typically occurs for very small or narrow recesses, to give the colour-shifting coating structure a typically lower (average) thickness in the recesses as compared with elsewhere on the substrate and hence control the colour exhibited. The degree to which the colour-shifting coating structure inefficiently fills the recesses has been observed to depend on the form of the recesses (where the form of a recess is considered to be its shape independent of size) and, for a set form, the aspect ratio of the recesses, as will be described in more detail below, where the aspect ratio of a recess is defined as the depth of the recess divided by the width of the recess. Accordingly, the colour-shift effect exhibited by the colour-shifting structure in the first recesses can be configured by controlling the form and/or aspect ratio of the recesses in the first region, thereby providing an alternative way of configuring the overall colour-shift effect produced by a security device.

In addition to inefficient filling of the recesses on the substrate, the size of the one or more land areas may affect the thickness of the colour-shifting coating received thereon. It has been found that an extensive land area (for example, with a width of at least 25 microns) located between recesses will exhibit respective first and second peaks in the colour-shifting coating proximate the recesses, these peaks being separated by an area of substantially uniform thickness of colour-shifting material. The area of substantially uniform thickness of colour-shifting material typically has a thickness that approximately corresponds to the thickness with which the coating is deposited. Accordingly, the average thickness and hence average colour exhibited by these land areas will be substantially the same as if the colour-shifting coating were applied to a uniform surface with no recesses. For smaller land areas, the peaks in the colour-shifting coating proximate the edges of the land area make up a larger proportion of the colour-shifting coating and therefore tend to increase the average thickness of, and hence average colour exhibited by, the colour-shifting material, i.e. as compared with an equivalent coating applied to a uniform surface. For yet smaller land areas (for example, with a width of approximately 15 microns), these peaks proximate the edges of the land areas begin to overlap, providing an enlarged dome of colour-shifting coating on the land area between the recesses, further increasing the average thickness of the colour-shifting coating on the land areas, i.e. as compared with an equivalent coating applied to a uniform surface. For land areas smaller still (for example, as the width of the land area drops below 15 microns), the ability of the land area to hold a colour-shifting coating decreases and the size of the dome of the colour-shifting coating decreases, decreasing the average thickness of, and hence average colour exhibited by, the colour-shifting material. For very small width land areas, this can lead to colour-shifting coatings with an average thickness less than would be observed for an equivalent coating applied to a uniform surface. Since it is primarily very narrow land areas that have a reduced ability to receive the colour-shifting coating, in the majority of embodiments of the invention, the recesses will have a lower average thickness of colour-shifting coating than the surrounding land areas. However, it will be appreciated that it is also possible to implement the invention, for example, by providing wide recesses and narrow land areas such that the inefficient filling effect is surpassed by the effect that narrow land areas have on the thickness of the colour-shifting coating, i.e. the average thickness on the land areas drops below that in the recesses.

It will be appreciated from the above that both the properties of the recesses and the intervening land areas can be controlled to affect the average thicknesses of the colour-shifting coating in the first region. The overall appearance of the first region will be affected by the average thicknesses of the colour-shifting coating in the recesses and land areas, and also by the proportion of the first region that is made up by land area and by recesses.

The present method comprises providing a substrate having a relief structure in or on its surface, the relief structure in a first region having one or more first recesses. The one or more first recesses may each be of the same form and have the same first aspect ratio by providing them with the same recess profile, preferably a square profile. Alternatively, the recesses may have different forms or profiles, and in some embodiments, one or more of the recesses have a profile which varies along the length of the recess, for example, the width and/or depth of the recess may vary along its length. The method then comprises applying the colour-shifting coating structure to the relief structure such that it is received in the first recess or recesses of the first region and on the one or more first land areas, i.e. such that it follows the relief structure. As mentioned above, inefficient filling can be harnessed such that the colour-shifting coating structure does not entirely conform to the relief structure, and so the colour-shifting coating structure has a first thickness on the floor of the recesses which is typically less than its thickness on the land(s) around the recesses. In practice, the colour-shifting coating structure in the first recess or recesses exhibits a first recess colour and the colour-shifting coating structure on the one or more first land areas exhibits a first land colour different from the first recess colour. While the recesses and the lands may exhibit different colours, typically, the result is that the first region has an overall appearance which depends on the colours exhibited from the colour-shifting coating structure on the lands and in the recesses. In other words, at any particular viewing angle, under normal viewing conditions, the first region will typically appear a colour that is an average of the colours exhibited by both of the land areas and the recesses.

In many security devices, it is desirable to provide different regions of colour-shifting structure which exhibit different effects, therefore preferably the method further comprises providing the substrate additionally with one or more neutral regions in or on its surface, the one or more neutral regions having substantially no relief structure, and further comprises applying the colour-shifting coating structure additionally to the one or more neutral regions of the substrate, wherein a thickness of the colour-shifting coating structure in the first recess or recesses is less than a thickness of the colour-shifting coating structure in the one or more neutral regions. In these embodiments, a neutral region, outside of the first region, also receives the colour-shifting coating structure, and as the neutral region has no recesses, it receives the colour-shifting coating structure with substantially the thickness in which it is applied to the substrate, this thickness being greater than the thickness in the recesses of the first region due to the inefficient filling, and typically being approximately the same or smaller in thickness than the colour-shifting coating structure on the first land areas, owing to the above described mechanism by which the thickness of the coating depends on the size of the land areas. As mentioned above, the appearance of the first region will typically be influenced by the colours exhibited in both the lands and the recesses of the relief structure, while the neutral regions may have a substantially constant thickness of colour-shifting coating structure providing the neutral regions with a different appearance to the first region.

Embodiments featuring one or more neutral regions have additional advantages over prior art methods. In the prior art, forming two different regions of different colours typically involves at least two separate colour-shifting coating formation processes, which accordingly may not be precisely registered to one another. The present method provides that the first region and the neutral regions are defined upon production of the relief structure, which may be done in a single step, ensuring the regions are integrally in register. When the colour-shifting coating structure is applied to the substrate, the relief structure itself, or lack thereof, affects the colour-shifting coating structure, as has been described above, giving the respective regions their appearance and maintaining the register integral to the relief formation.

Alternatively, or in addition to neutral regions, the relief structure may be provided in a second region of the substrate, the relief structure in the second region having a second recess or a plurality of second recesses in or on the surface of the substrate, the second recess or recesses being recessed with respect to one or more corresponding second land areas of the second region in or on the surface of the substrate, and the method further comprise applying the colour-shifting coating structure to the relief structure such that it is additionally received in the second recess or recesses of the second region and on the one or more second land areas such that a thickness of the colour-shifting coating structure in the second recess or recesses is greater than or, more typically, less than a thickness of the colour-shifting coating structure on the one or more second land areas. The second region may abut the first region, or may be spaced from the first region, e.g. by neutral regions. The second recesses may all have the same form, and this may be the same as the form of each of the first recesses. In some examples, the first recess or recesses may be of the same form and size as the second recess or recesses, i.e. the recesses are substantially the same. In such cases, the second recesses may be spaced differently in the second region than the first recesses are spaced in the first region, e.g. such that the land area makes up a greater or lesser proportion of the total area of the second region, thereby providing the second region with a different overall colour to the first region (owing to the weighted average of the exhibited colour-shifts being different). In alternative embodiments, each of the first recess or recesses has a first form, and each of the second recess or recesses has a second form different from the first form (e.g. by providing the second recesses with a different shape in plan view to the first recesses), and a thickness (average thickness) of the colour-shifting coating structure in the second recess or recesses is less than the thickness (average thickness) of the colour-shifting coating structure in the first recess or recesses. Where the first and second recesses have the same form, the second recesses may have the same aspect ratio as the first, for example, they may have the same depth to width ratio, or may have a different aspect ratio. Preferably, the first recess or recesses have a first recess profile, the first recess profile having a first aspect ratio defined as a depth of said first recess profile divided by a width of said first recess profile, and the second recess or recesses have a second recess profile, the second recess profile having a second aspect ratio defined as a depth of said second recess profile divided by a width of said second recess profile, the second aspect ratio being greater than the first aspect ratio, and a thickness of the colour-shifting coating structure in the second recess or recesses is less than the thickness of the colour-shifting coating structure in the first recess or recesses.

Providing a second region of recesses introduces additional complexity to the device and thereby increases security. It will be appreciated that any number of regions may be provided, and some particularly preferable examples of the use of a more than two regions will be described below. Where a second region is provided, the recesses of the second region may be provided with a second aspect ratio greater than the first. In such cases, the colour-shifting coating structure will be thinner in the second recesses than in the first recesses, and accordingly will exhibit a different colour. The average thickness of colour-shifting coating structure on the second land areas will depend on the width of those land areas, as has been described above, but may be configured to be of greater or lesser average thickness than the corresponding land areas in the first region, depending on the desired overall appearance of the second region. The second region will typically have an appearance that depends on the colours exhibited from the colour-shifting coating structure on the lands and in the recesses, and this will therefore typically be different from the appearance of the first region owing to the different aspect ratio of recesses and widths of the land areas. As described above with respect to the neutral regions, since the recesses of the first and second regions may be formed as part of the same process, and hence may be integrally register, the first and second regions may be configured to have different appearances resulting from the colour-shifting coating structure while maintaining register between the regions in the final device.

Preferably applying a colour-shifting coating structure to the relief structure comprises applying the colour-shifting coating structure using a first set of processing conditions. Preferably, the colour-shifting coating structure is applied over all regions substantially simultaneously or in line in a single process, with each region receiving the colour-shifting coating structure in substantially the same manner, e.g. the colour-shifting coating structure being applied to the regions with substantially the same thickness, allowing any variation in thickness to be selected by the inefficient filling of recesses and by the effect the width of the land areas has on the thickness of the colour-shifting coating. Preferably, the colour-shifting coating structure is applied so as to be substantially continuous on at least the relief structure. In some embodiments, the colour-shifting coating structure on the first (and second) land areas have the same and substantially the same thickness, e.g. by providing the land areas of similar width, thereby allowing colour variation to be provided by the variation induced by the properties of the recesses; however, alternatively, the colour-shifting coating may be received on the land areas with different average thicknesses, e.g. by providing different widths of those first and second land areas.

Preferably the first recess or recesses have a first recess profile having a first aspect ratio defined as a depth of said first recess profile divided by a width of said first recess profile and comprising applying the colour-shifting coating structure with a thickness that is less than the depth of the first recess profile. Where second and/or subsequent regions are provided, preferably the colour-shifting coating structure is applied with a thickness that is less than the depths of the recesses of the second and subsequent regions. It has been observed that the inefficient filling works best where the colour-shifting coating has a thickness that is less than the depth of the recesses, although this is not essential to achieve the effect.

Where recesses of different aspect ratios are used, preferably the recesses have the same depths and different widths. Where recesses of different form are used, preferably the recesses have the same depth. Recesses of the same depth can be provided with a higher degree of registration than those whose aspect ratio is varied by changing the depth.

Typically, the colour-shifting coating structure comprises at least a reflector layer comprising an at least partially reflective material, an optical spacer layer and an absorber layer comprising a partially reflective material. Where the substrate is intended to be viewed from above, the reflector layer is applied to the substrate before the optical spacer layer and the absorber layer. Where the substrate is transparent and intended to be viewed from below, the absorber layer is applied to the substrate before the optical spacer layer and the reflector layer. While typically one of each layer is used, in some embodiments, additional absorber layers and optical spacer layer are provided.

When the colour-shifting structure is comprised as described above, the absorber layer(s), optical spacer layer and the reflector layer are applied in separate application steps, preferably each in a single application step. For example, the reflector layer may be applied in a single step to the relief structure (and any neutral regions). The reflector layer is typically applied in a conformal manner, for example by vacuum deposition, on to the substrate. Subsequently, the optical spacer layer is applied to the relief structure (and any neutral regions), again in a single step. Preferably the optical spacer layer is applied in a liquid state. This can be achieved using a wet coating process, such as a slot die or rotogravure process, or by creating a vapour phase which forms a liquid when brought into contact with a cooled substrate as described in EP2538247. The optical spacer layer inefficiently fills the recesses of the relief structure and as a result is non-conformal. In the first region, the optical spacer layer is thereby thicker on the first land area than in the first recess or recesses, and similarly for second and subsequent regions is thicker on land areas than recesses.

In some embodiments, wherein the thickness of the colour-shifting coating structure in the first recess or recesses is such that, when viewed in reflection, the colour-shifting coating structure generates constructive interference in reflected light only at wavelengths less than 400 nm (i.e. outside of the visible spectrum), or in other words, the thickness of the colour-shifting coating structure in the first recess or recesses is substantially zero. This is typically achieved by providing the recesses with a high aspect ratio which produce very inefficient filling. It should be understood that a thickness of substantially zero, as it applies to colour-shifting structures, is a thickness which produces interference at short wavelengths, especially wavelengths outside of the visible spectrum. When the colour-shifting coating structure is formed of an absorber layer, optical spacer layer and a reflector layer, the thickness of the optical spacer layer is substantially zero such that the optical path difference produces interference at short wavelengths, especially wavelengths outside of the visible spectrum. In embodiments in which first and second regions are provided, the second recesses may instead be provided with the colour-shifting coating of substantially zero thickness which the thickness of the colour-shifting coating structure in the first recess or recesses is greater than substantially zero. Where more than first and second regions are provided, only those one or more regions with the highest aspect ratios may be configured to receive a colour-shifting coating structure of substantially zero thickness. One or more regions provided with colour-shifting coating structure in the recess or recesses wherein the thickness of the colour-shifting coating structure in the first recess or recesses is such that, when viewed in reflection, the colour-shifting coating structure generates constructive interference in reflected light only at wavelengths less than 400 nm may desaturate the colour within the region or give the region a metallic appearance, i.e. the land areas may exhibit a colour-shift while the recess areas appear as bright reflective elements, owing to the reflective layer that typically makes up uppermost layer of the colour-shifting structure. This may provide the device with a more complex appearance and thereby improve security.

In some embodiments, providing the substrate having a relief structure in or on its surface comprises: providing a substrate; and forming the relief structure in or on a first surface of the substrate. Preferably the step of forming the relief structure is performed in a single process step for all regions so that all regions are inherently in register. Providing the relief structure in the surface may comprise embossing into a thermoplastic resin or casting into a curable polymeric resin. Providing the relief structure on the surface may comprise providing a partial covering of material onto the surface of the substrate to act as the one or more land areas.

Preferably the plurality of first recesses are provided in accordance with a first grid structure, where a grid structure is considered to be a two-dimensional array of elements, preferably a repeating array of elements. Where additional regions are provided with additional recesses, these also may or may not be provided in accordance with a grid structure, optionally the same grid structure. In particularly preferable embodiments, the first recesses are provided in accordance with a grating structure, and in particular a square-profiled grating structure. While grid structures or grating structures are preferable, the recesses may alternatively be provided in any regular or irregular arrangement.

In particularly preferable embodiments, the relief structure is a diffractive relief structure and/or the grating structure arrangement of recesses in at least one of the regions is a diffractive grating structure. Such embodiments may provide additional diffractive effects which cooperate with the colour-shift effects to produce a more complex optically variable effect and thereby increase the security of the device. Where a diffractive structure is provided, the appearance of any one region of the device, at any one viewing angle, will be influenced by both the colour-shifting effects of the colour-shifting coating structure and the diffractive effects of the diffractive structure.

As mentioned above, some embodiments of the invention may comprise a second region whose recesses are provided in accordance with a second grid structure or second grating structure. The second grid or grating structure may or may not be the same as the first grid or grating structure. In either case, preferably the second grid or grating structure is angularly offset with respect to the first grid or grating structure. For example, where the first and second grid structures are comprised of an arrangement of parallel elongate trough-shaped recesses, the direction of extension of the recesses may be different in different regions. It will be appreciated that the angular offset may be used between regions having the same or different aspect ratio recesses. In particularly preferable embodiments first and second regions are provided with recesses of a first aspect ratio, e.g. with the same recess profile or having identical grid structure, and an angular offset is provided between the recesses of the first and second regions; and third and fourth regions are provided with recesses of a second aspect ratio, e.g. with the same recess profile or having identical grid structure, and an angular offset is provided between the recesses of the third and fourth regions. In such cases, at least one of the first and second regions may be configure to have the same angular arrangement as one of the third and fourth regions. Providing angular offsets between regions may alter the optically variable effect generated by the device, particularly, but not exclusively, where the regions are diffractive. Examples of such embodiments will be provided below.

Preferably, the pitch of the first grid structure (and any other grid structure of any other region) is not less than 1 µm, preferably not less than 3 µm. This is particularly preferable where the grid structure is a diffractive grating structure so as to prevent the diffractive effect produced from overwhelming the colour-shift effect.

Preferably, the pitch of the first grid structure (and any other grid structure of any other region) does not exceed 50 µm, preferably does not exceed 10 µm. In such embodiments, under normal viewing conditions, the human eye will typically be unable to resolve the colour-shift effect of the colour-shifting structure in the recesses from that of the colour-shifting structure on the land areas, giving the region an appearance that is an average of the two colour-shift effects. While preferable, larger pitches may be used where it is desirable for the different colour-shift effects to be resolved, or where the security device is intended to be viewed from a greater than normal distance.

In some embodiments, the relief structures of the first and any subsequent regions are provided to form structures such as a Fresnel lens relief structure or a zone plate structure.

In some embodiments, the first recess or recesses have a first recess profile having a first aspect ratio defined as a depth of said first recess profile divided by a width of said first recess profile and the first aspect ratio has a value in the range of 0.02 to 0.3, preferably in the range of 0.1 to 0.25. The recesses of any other region may also have aspect ratios within these ranges.

The various regions may advantageously be provided so as to produce a security device exhibiting a pattern, one or more indicia or alphanumeric characters or the like. For example, preferably, one of the first region, second region and/or neutral region partially or substantially surrounds another of the first region, second region and/or neutral region so as to provide a background. Alternatively, or in addition, the first region (and/or any other region) may define one or more indicia or a part of one or more indicia.

In some embodiments, the relief structure is additionally provided in a third region of the substrate, the relief structure in the third region having a third recess or a plurality of third recesses in or on the surface of the substrate, the third recess or recesses being recessed with respect to one or more corresponding third land areas of the third region in or on the surface of the substrate, and the method comprises applying the colour-shifting coating structure to the relief structure such that it is additionally received in the third recess or recesses of the third region and on the one or more third land areas such that a thickness of the colour-shifting coating structure in the third recess or recesses is greater than or, more typically, less than a thickness of the colour-shifting coating structure on the one or more third land areas, wherein the third recess or recesses have a third recess profile, the third recess profile having a third aspect ratio defined as a depth of said third recess profile divided by a width of said third recess profile, the third aspect ratio being greater than the second aspect ratio, and wherein a thickness of the colour-shifting coating structure in the third recess or recesses is less than the thickness of the colour-shifting coating structure in the second recess or recesses. Providing a third region with recesses of a third aspect ratio allows for an additional distinct colour-shift effect to be produced within the device. In particularly preferable embodiments, the first, second and third regions are arranged in order across the surface of the substrate. For example, the first region may be abutting the second region and the second region abutting the third region. In such embodiments, gradient effects can be produced as the thickness of the colour-shifting coating structure in the recesses decreases across the regions adjacent one another.

As mentioned above, the inefficient filling effect is particularly prominent for small recesses. Therefore, preferably each of the first recess or recesses has a depth not greater than 50 µm, preferably not greater than 20 µm, more preferably not greater than 10 µm, most preferably not greater than 5 µm. Further, preferably each of the first recess or recesses has a width not greater than 100 µm, preferably not greater than 50 µm, more preferably not greater than 20 µm most preferably not greater than 10 µm. Where additional regions are provided, preferably the recesses of those regions also are sized as outlined above.

Similarly, effects on the colour-shifting coating in the land areas are particularly prominent in land areas that have a width of between 1 µm and 100 µm, and preferably the width of the land areas are between 1 µm and 50 µm, more preferably between 1 µm and 25 µm, most preferably between 1 µm and 15 µm. These correspond to the ranges of land area widths over which there is the greatest variation in average thickness and therefore allow for greater control over the overall appearance of the corresponding regions.

In accordance with a second aspect of the present invention, there is provided a security device comprising: a substrate having a relief structure provided in or on its surface, the relief structure being provided in a first region of the substrate; the relief structure in the first region having a first recess or a plurality of first recesses in or on the surface of the substrate, the first recess or recesses being recessed with respect to one or more corresponding first land areas in or on the surface of the substrate; and a coating of a colour-shifting structure on the relief structure in the first recess or recesses and on the one or more first land areas; wherein a thickness of the coating of the colour-shifting structure in the first recess or recesses is less than a thickness of the coating of the colour-shifting structure on the one or more first land areas. The security device according to the second aspect of the present invention may be manufactured using the method according to the first aspect of the present invention.

Each of the preferable features discussed above in relation to the method of producing a security device has corresponding features that are preferable in the context of the security device of the second aspect of the invention, as will be appreciated by one skilled in the art.

In accordance with a third aspect of the present invention, there is provided an article having the security device according to the second aspect. Preferably, the article is selected from banknotes, cheques, passports, identity cards, certificates of authenticity, fiscal stamps and other documents for securing value or personal identity.

### BRIEF DESCRIPTION OF THE DRAWINGS

Figure 1 shows, schematically, a front view of a security document having a security device according to a first embodiment;
Figures 2A to 2D show, schematically, respective cross-sections of the security device according to the first embodiment at various stages during manufacture;
Figure 3 shows, schematically, the security device according to the first embodiment in the process of manufacture;
Figure 4 shows, schematically, a front view of a security document having a security device according to a second embodiment;
Figures 5A and 5B show, schematically, respective cross-sections of the security device according to the second embodiment at two different stages during manufacture;
Figures 6A and 6B show, schematically, respective cross-sections of the security device according to a third embodiment at two different stages during manufacture;
Figure 7 shows, schematically, a front view of a security document having a security device according to a fourth embodiment;
Figure 8 shows, schematically, a cross-section of the security device according to the fourth embodiment;
Figure 9 shows, schematically, a front view of a security document having a security device according to a fifth embodiment;
Figure 10 shows, schematically, a front view of a security document having a security device according to a sixth embodiment;
Figure 11 shows, schematically, a cross-section of the security device according to the sixth embodiment;
Figure 12 shows, schematically, a front view of a security document having a security device according to a seventh embodiment;
Figures 13A to 13F show, schematically, front views of security devices according to eighth to thirteenth embodiments respectively;
Figures 14A and 14B show, schematically, a front view of a security document having a security device according to a fourteenth embodiment and an enlarged front view of the security device according to the fourteenth embodiment respectively;
Figure 15 shows, schematically, a cross-section of the security device according to the fourteenth embodiment
Figure 16A and 16B show, schematically, a front view of a security document having a security device according to a fifteenth embodiment and an enlarged front view of the security device according to the fifteenth embodiment respectively;
Figure 17A and 17B show, schematically, a front view of a security document having a security device according to a sixteenth embodiment and an enlarged front view of the security device according to the sixteenth embodiment respectively;
Figures 18A to 18C show, schematically, front views of security devices according to seventeenth to nineteenth embodiments respectively
Figures 19A and 19B show, schematically, a first security document having a security device according to an embodiment in front and cross-section views respectively;
Figures 20A and 20B show, schematically, a second security document having a security device according to an embodiment in front and cross-section views respectively; and
Figures 21A to 21C show, schematically, a security document having a security device according to an embodiment in front view, and first and second alternative cross-section views respectively.

### DETAILED DESCRIPTION

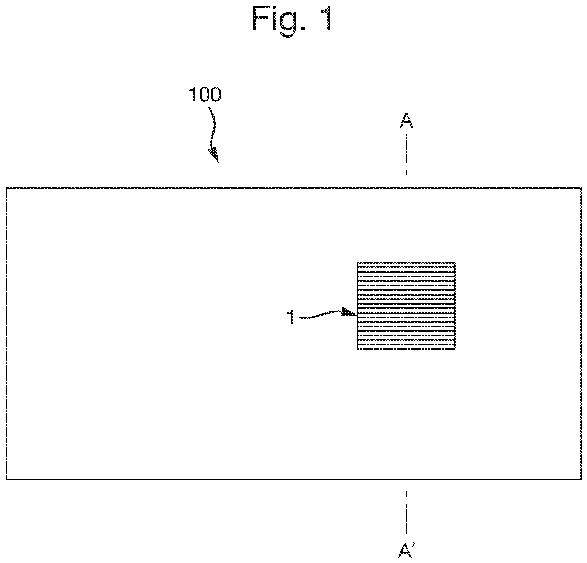

A first embodiment of the invention will now be described with reference to Figures 1 to 3.

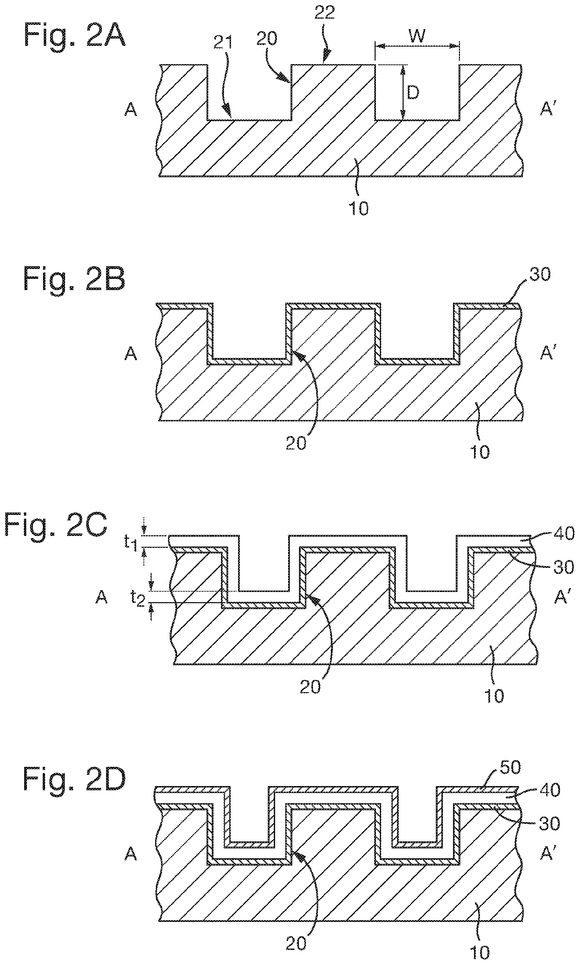

Figure 1 shows a security article, in this case a security document 100, having a security device 1 that produces a colour-shifting effect on one surface. A cross-sectional view of the security device along line A-A' is shown in Figures 2A to 2D at various stages during manufacture. Figure 2A shows a substrate 10 having a relief structure 20 formed in its upper surface. The relief structure comprises a series of regularly spaced, square-profiled, recesses 21, which are recessed with respect to a corresponding series of land 22 areas on the surface of the substrate. Each recess is elongate in that it has a length along the surface of the substrate that is greater than either its width or its depth. Each recess is linear runs parallel with the other recesses. Together, the series of recesses form a diffractive relief structure, in this case a diffraction grating, on the surface of the substrate 10. The substrate 10 may be formed of a UV curable resin. The curable material is preferably radiation-curable and may comprise a resin which may typically be of one of two types, namely:
a) Free radical cure resins, which are typically unsaturated resins or monomers, pre-polymers, oligomers etc. containing vinyl or acrylate unsaturation for example and which cross-link through use of a photo initiator activated by the radiation source employed e.g. UV.
b) Cationic cure resins, in which ring opening (e.g. epoxy types) is effected using photo initiators or catalysts which generate ionic entities under the radiation source employed e.g. UV. The ring opening is followed by intermolecular crosslinking.

The radiation used to effect curing will typically be UV radiation but could comprise electron beam, visible, or even infra-red or higher wavelength radiation, depending upon the material, its absorbance and the process used. Examples of suitable curable materials include UV curable acrylic based clear embossing lacquers, or those based on other compounds such as nitrocellulose. A suitable UV curable lacquer is the product UVF-203 from Kingfisher Ink Limited or photopolymer NOA61 available from Norland Products. Inc, New Jersey.

Where a UV curable resin is used, the resin will typically be provided on a carrier substrate, such as polyesterpolyethylene teraphthalate (PET) or biaxially oriented polypropylene (BOPP), which supports the curable resin during formation of the relief structure.

If formed of a UV curable resin, the relief structure 20 will typically be formed in the surface of the substrate 10 using a cast cure process, as is understood in the art.

Alternatively the recesses may be formed by a hot embossing process into a thermoplastic substrate. Examples include a thermoplastic layer such as polyesterpolyethylene teraphthalate (PET), polyethylene, polyamide, polycarbonate, poly(vinylchloride) (PVC), poly(vinylidenechloride) (PVdC), polymethylmethacrylate (PMMA), polyethylene naphthalate (PEN), polystyrene, or polysulphone; or an embossing lacquer layer, such as a PMMA-based resin

Each recess 21 has a depth D and a width W. The depth D of a recess is considered to be the perpendicular distance between the floor of the recess and the surface of the substrate forming the land areas 22 between the recesses.

The width of a recess is considered to be the smallest lateral distance across the recess, which in this case is a direction perpendicular to its long axis. Each recess 21 has an aspect ratio, defined as the depth of the recess divided by the width.

Figure 2B shows the substrate 10 in cross-section following the application of a reflector layer 30. The reflector layer completely conforms to the relief structure 20 and is formed of a reflective material, such as copper, aluminium, nickel, chrome or any alloys thereof (e.g. nickel-chrome alloys). So that the reflector layer 30 is conformal with the relief structure 20, preferably the reflector layers are laid down by a conformal process, such as vacuum deposition (encompassing sputtering, resistive boat evaporation or electron beam evaporation for example), or by chemical vapour deposition. In this embodiment, the reflector layer is a layer of aluminium having a thickness of 5 to 30 nm.

Figure 2C shows the substrate in cross-section following the application of an optical spacer layer 40. The optical spacer layer may be selected from suitable dielectric materials well known in the art, and is preferably an organic spacer layer applied in liquid form. Example systems would include unsaturated resins or monomers, pre-polymers, oligomers etc. containing vinyl or acrylate unsaturation for example and which cross-link through use of a photo initiator activated by the radiation source employed e.g. UV. The optical spacer layer 40 is applied to the surface of the substrate using a wet-coating process, such as by a slot die or microgravure process, as will be described in more detail below. The thickness of the optical spacer layer will typically be in the range 100 to 400 nm The optical spacer layer in this embodiment has a refractive index of approximately 1.5 and is applied with a thickness of 170 nm. By applying the optical spacer layer 40 using a wet-coating process, the optical spacer layer 40 may not entirely conform to relief structure. Specifically, it has been found that depending on the width of the land areas between the recesses, the optical spacer layer is received on the land areas 22 having an average thickness that may be less than, greater than or substantially the same as the thickness with which it is applied. In this embodiment, the land area width is such that a dome of the optical spacer layer is formed on those land areas, i.e. thickness t₁ > 170 nm. In addition to this, the optical spacer layer inefficiently fills the recesses 21, resulting in a smaller thickness of the optical spacer layer on the floor of the recesses 21, i.e. thickness t₂ < 170 nm. The degree to which the wet-coated optical spacer layer inefficiently fills the recesses 21 and is received on the land areas, or the precise difference between t₁ and t₂, will depend on a number of factors, including the material used to form the reflector layer, the material used to form the optical spacer layer, the processing conditions, and the size and shape of the recesses and land areas.

As will be described in more detail below, the size of the recesses may be used to control the thickness of the optical spacer layer in the recesses. However, in this embodiment, the recesses are of a single size and each have a width of 10 µm and a depth of 0.5 µm. The distance between each recess, i.e. the width of the land areas is 10 µm, resulting in a pitch of 20 µm. Each recess is elongate and substantially straight, having a length on the order of 1 mm. Each recess has a substantially square profile.

Figure 2D shows the substrate in cross-section following the application of an absorber layer 50 over the optical spacer layer 40. The absorber layer completely conforms to the optical spacer layer 40 over the relief structure 20 and is formed of a partially reflective material, such as a layer of Cr, Ni or alloys such as Ni-chrome having a thickness of 5 to 12 nm. As with the reflector layer, to ensure conformity with the optical spacer layer 40, the absorber layer 50 is applied using a conformal process, such as vacuum deposition, for example by sputtering.

In the above embodiment, the security device is intended to be viewed from the side of the substrate coated with the reflector layer 30, optical spacer layer 40 and absorber layer 50, and so they are described as being applied in this order. It will be appreciated, however, that the security device could be formed on a transparent substrate layer 10 and intended for viewing through the substrate layer. In such cases, the layers would be applied in reverse order, i.e. absorber layer 50, optical spacer layer 40 and then reflector layer 30.

The reflector layer 30, optical spacer layer 40 and absorber layer 50 together form a colour-shifting coating structure on the surface of the relief structure. A colour-shifting structure exhibits a colour that depends on the distance between two reflecting surfaces, in this case the absorber and the reflector layers, and the refractive index of the material between the surfaces, in this case the optical spacer layer. Both of these influence the optical path difference of reflected light. Since the optical spacer layer 40 has a constant refractive index, but a thickness that differs as between the land areas 22 and the floors of the recesses 21, the colour-shifting coating structure will exhibit a colour in the land areas different from in the recess areas. The resulting appearance of the security device 1, viewed under normal conditions at a typical viewing distance, will include a colour-shifting effect that, at each viewing angle, is the average of the colours exhibited from the land areas and the recess areas, the colour-shifting effect being superimposed on a diffractive effect generated by the diffractive grating shape of the relief structure.

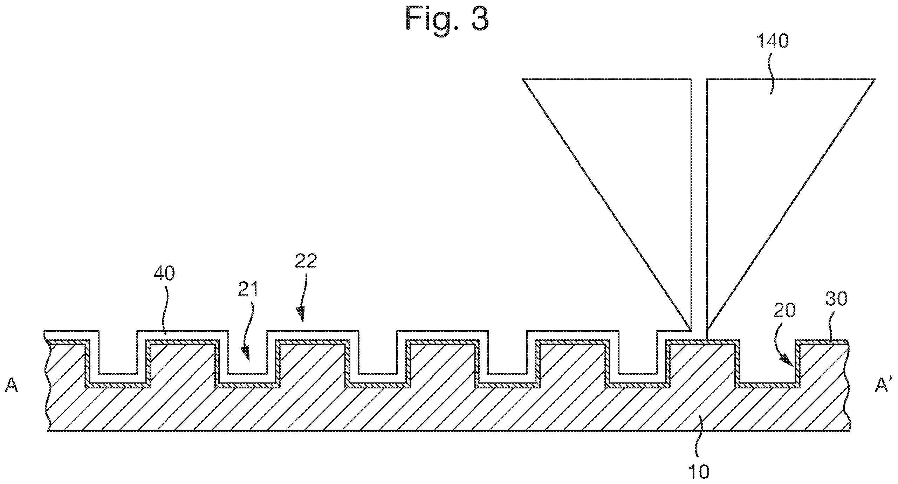

Figure 3 shows, schematically, the application of the optical spacer layer 40 to the relief structure 20. Here, the surface of the substrate is moved at a constant speed past a slot die 140, which extends laterally across the entire security device, perpendicular to the width dimension of the recesses. The slot die 140 continuously applies the wet coating of optical spacer layer material to the relief structure 20 as the substrate 10 is moved relative to the slot die 140 in a direction parallel to the width dimension of the recesses. Typically, movement of the substrate 10 past the slot die 140 will be achieved by providing the substrate on an elongate web, and positioning the slot die 140 over a roller (not shown) for conveying the web.

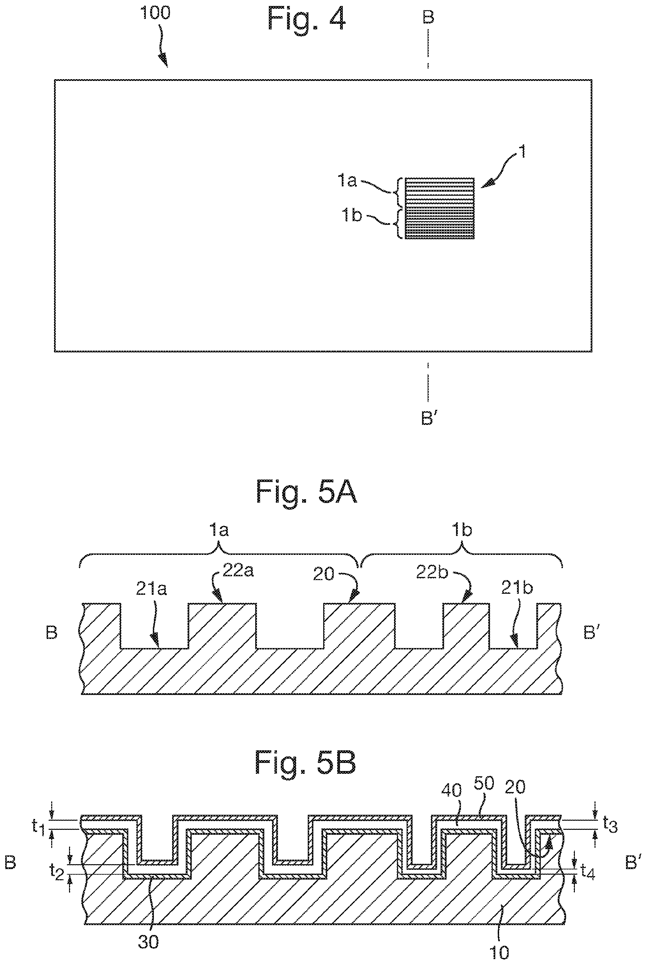

A second embodiment of the invention will now be described with reference to Figures 4, 5A and 5B.

Figure 4 shows a security document 100 having a security device 1 that produces a colour-shifting effect on one surface superimposed on a diffractive effect. The security device 1 is similar to in the first embodiment, but has first and second distinct regions 1a, 1b that produce different colour-shifting effects and different diffractive effects. A cross-section of the security device 1 along line B-B' is shown in Figures 5A and 5B, showing the transition from the first into the second region, at two different stages during manufacture.

Figure 5A shows the substrate 10 having a relief structure 20 formed in its upper surface. The relief structure is provided in both the first and second regions 1a, 1b. Again, the relief structure in each region comprises a series of regularly spaced, square-profiled, elongate, trough-shaped recesses 21a, 21b, which are recessed with respect to corresponding land areas 22a, 22b on the surface of the substrate. The relief structure in the first region 1a has the same repeating structure as the relief structure in the first embodiment. That is, each recess has a width of 10 µm, a depth of 0.5 µm and a distance to the next recess of 10 µm. The relief structure in the second region is provided with the same depth, 0.5 µm, but a narrower width of 8 µm. The result is that the recesses 21a of the first region 1a have a first aspect ratio that is smaller than the second aspect ratio of the recesses 21b of the second region 1b.

Figure 5B shows the substrate 10 after the application of the reflector layer 30, optical spacer layer 40 and absorber layer 50. The reflector layer 30, optical spacer layer 40 and absorber layer 50 are applied over the relief structure as described above with respect to the first embodiment. However, as has been mentioned above, it has been found that the aspect ratio of the recesses affects the efficiency of the filling of the recesses by the optical spacer layer 40. Therefore, as shown in Figures 5B, the optical spacer layer on the land areas 22a in the first region 1a is received having a thickness greater than that with which it is applied, i.e. thickness t₁, and inefficiently fills the recesses 21a, resulting in a smaller thickness of the optical spacer layer on the floor of the recesses 21a, i.e. thickness t₂. These thicknesses will be the same as for the first embodiment, provided identical processing conditions are used. In the second region 1b, the land areas 22bare narrower and so receive the optical spacer layer having a thickness less than in the first land areas, i.e. thickness t₃ is less than t₁, and, owing to inefficient filling, is received in the recesses 21b having a thickness t₄ that is smaller than the thickness in the recesses 21a of the first region 1a, i.e. t₂. Overall, the first region has greater average thicknesses of the optical spacer layer than the second region.

The colour-shifting coating structure, formed by the reflector layer 30, optical spacer layer 40 and absorber layer 50, thus has a lower average thickness in the first land areas 22a as compared with the second land areas22b, and also differs in thickness in the recesses 21a, 21b. For the first region 1a, at any one viewing angle, the colour-shift effect will be an average of the colour exhibited by the colour-shifting coating structure on the first land areas 22a and the colour exhibited by the colour-shifting coating structure in the first recesses 21a. For the second region 1b, at any one viewing angle, the colour-shift effect will be an average of the colour exhibited by the colour-shifting coating structure on the second land areas 22b and the colour exhibited by the colour-shifting coating structure in the second recesses 21b. The colour of the first region 1a will therefore appear as the combination of the colour-shift effect of the first region 1a and the diffractive effect of the relief structure in that region, while the second region 1b will appear as the combination of the colour-shift effect of the second region and the diffractive effect of the relief structure in that region. Because of the differing thickness of the colour-shifting coating structure in the recesses of the first and second regions 1a, 1b, and because of the differing grating structure, the overall colour of the first and second regions will be different.

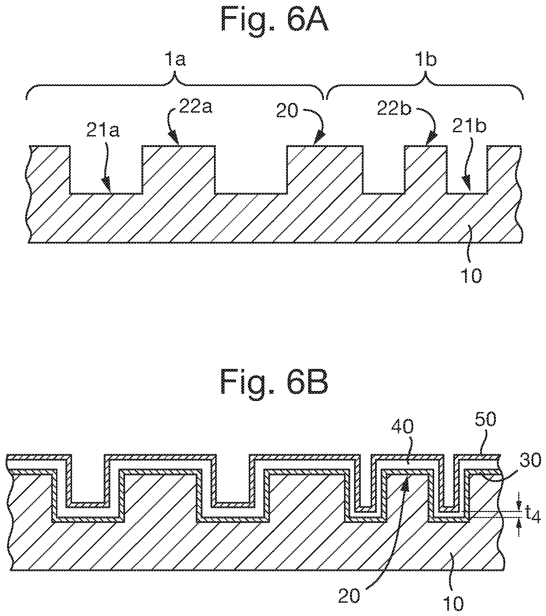

Figure 6A shows a third embodiment. In the third embodiment, the security device 1 is provided with a relief structure 20 in first and second regions 1a, 1b. The relief structure in the first region 1a is identical to the relief structure in the first region of the second embodiment. The relief structure in the second region 1b comprises a series of regularly spaced, square-profiled, elongate, trough-shaped recesses that are narrower still than those in the second region of the second embodiment. Specifically, the recesses 21b of the second region have a depth of 0.5 µm and a width of 1.5 µm, with a distance between adjacent recesses of 1.5 µm. As is evident from Figure 6B, which shows the substrate 10 after application of the reflector layer 30, optical spacer layer 40 and absorber layer 50, the aspect ratio of the recesses 21b of the second region 1b is now so high that the thickness of the optical spacer layer 40 of the floor of the recesses 21b is substantially zero. That is to say, the thickness of the optical spacer layer 40 on the floor of the recesses 21b is now such that the optical path difference produced by the colour-shifting coating structure generates interference at short wavelengths outside of the visible spectrum, i.e. t₄ is much smaller than t₁ to t₃, which in the above embodiments produce interference within the visible spectrum. Here, the width of the land areas is such that the land areas receive a coating of colour-shifting material that is of lower average thickness than the thickness with which it is applied.

The colour-shifting coating structure in the recesses 21b of the second region 1b appear achromatic in reflection, which is to say that they do not exhibit any visible colour-shift. As a result, the second region will have an appearance that is dictated by the diffractive effect of the relief structure of the second region and the colour-shifting coating structure on the land areas 22b of the second region in combination with the achromatic appearance of the recesses 21b of the second region. The second region will therefore appear a different colour to the first region.

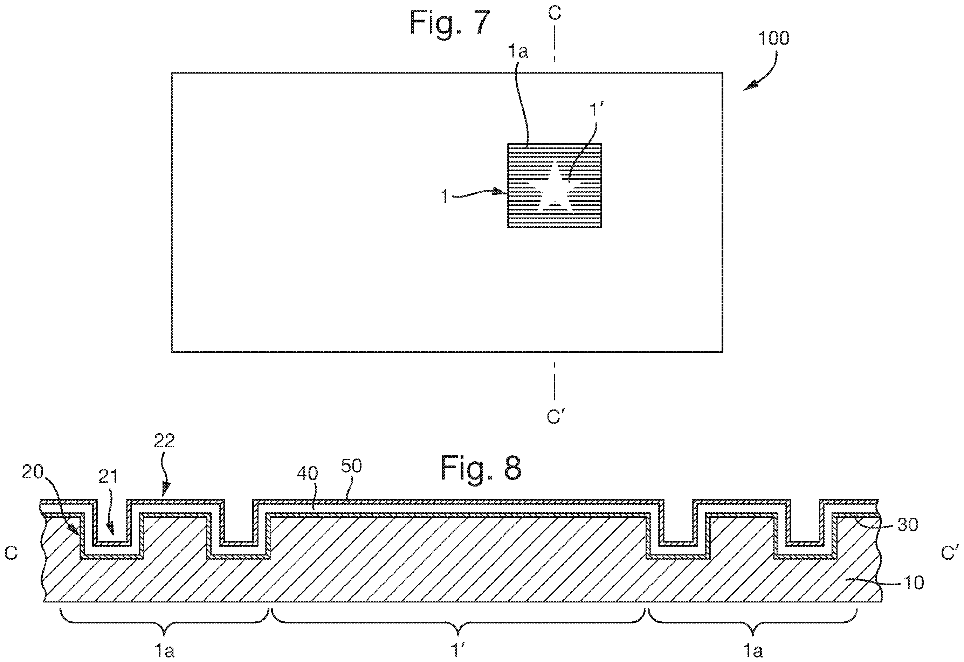

A fourth embodiment will now be described with respect to Figures 7 and 8.

Figure 7 shows a security document 100 having a security device 1 that produces a colour-shifting effect on one surface. The security device 1 is similar to in the first embodiment, but has the relief structure 20 provided only in a first partial region 1a of the security device, and is additionally provided with a neutral region 1' in the remainder of the security device. In this embodiment, the neutral region 1' defines a star-shaped indicium on the security device, with the first region 1a providing a background to this indicium.

Figure 8 shows the security device 1 of the fourth embodiment in schematic cross-section along the line C-C'. The first region 1a is provided with a relief structure whose repeating is identical to that of the first embodiment, comprising a series of recesses 21a and land areas 22a. The neutral region 1' is provided as an area of the security device in which the surface of the substrate 10 has no recesses, i.e. without any relief structure. This area of the substrate defines the star-shaped indicia mentioned above. The reflector layer 30, optical spacer layer 40 and absorber layer 50 are applied to the surface of the substrate, across both the first region 1a and the neutral region 1' as described above. The optical spacer layer 40 is received on the land areas 22a of the first region 1a having a thickness t₁ and is received in the recesses 21a of the first region 1a having a smaller thickness, t₂, owing to the inefficient filling. The optical spacer layer is received over the substrate 10 in the neutral region 1' having substantially the thickness with which it is applied.

When the security device 1 of the fourth embodiment is viewed in reflection, the first region 1a, which comprises the relief structure 20, will appear a colour that is a combination of the diffractive effect and the colour-shift effect, the colour-shift effect being an average of the colours exhibited by the colour-shifting coating structure in the recesses 21a and on the land areas 22a, which, as described above, have different thicknesses and therefore exhibit different colours. The neutral region 1', however, will appear a colour that is influenced only by the colour-shifting coating structure on the relief-structure-free region of the substrate 10, i.e. a colour-shifting coating structure with substantially constant thickness. The neutral region will also not exhibit any diffractive effect as no relief structure is present. The neutral region 1' will therefore exhibit a different colour to the first region 1a, thereby making the star-shaped indicium visible on the security device.

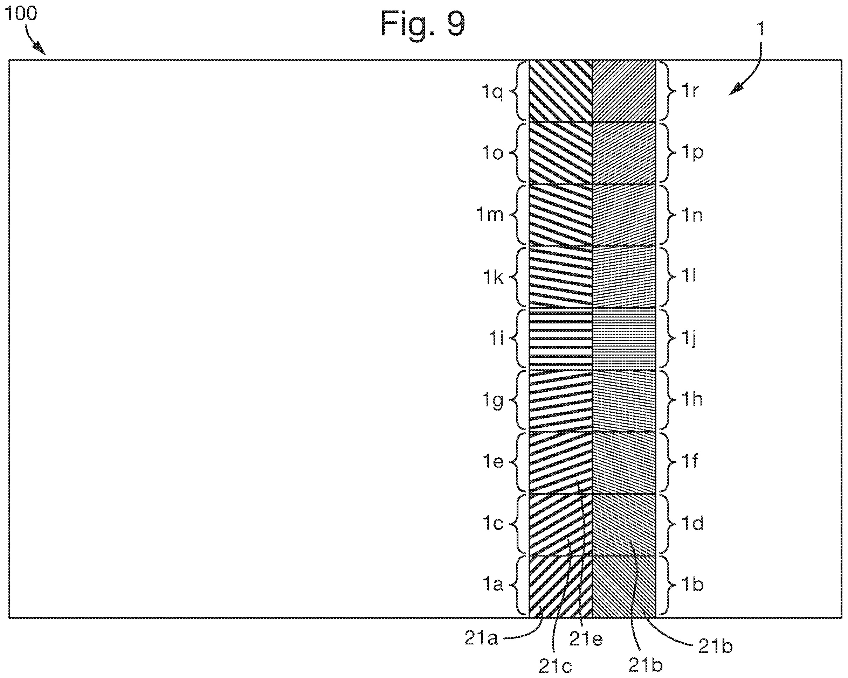

A fifth embodiment will now be described with respect to Figure 9.

The security document 100 is provided with a security device 1 having eighteen different regions 1a-1r.

A first subset of the regions 1a, 1c, 1e, 1g, 1i, 1k, 1m, 1o, 1q are provided in order across the full height of the security document. Each region of this first subset is provided with a relief structure formed of recesses that each has a width of 10 µm, a depth of 0.5 µm and a distance between each recess of 10 µm, that is, having the dimensions of the recesses of the first region in the second embodiment. The first region, 1a is provided with the elongate trough shaped recesses 21a extending at an approximately 45° angle to the long axis of the security document. That is to say, that the first region is provided with the relief structure or grating structure in a first orientation on the surface of the security document. The third region 1c, which is provided adjacent the first region 1a, has its elongate trough shaped recesses 21c extending at an approximately 34° angle to the long axis of the note, or angularly offset in a clockwise direction with respect to the first region 1a by approximately 11°, i.e. in a second orientation. The fifth region 1e, which is provided adjacent the third region 1e, has its elongate trough shaped recesses 21e extending at an approximately 23° angle to the long axis of the note, or angularly offset with respect to the third region by approximately 11°. This continues across the seventh 1g, ninth 1i, eleventh 1k, thirteenth 1m, fifteenth 1o and seventeenth 1q regions, with each region having elongate trough shaped recesses that are angularly offset with respect to the previous region by approximately 11° in a clockwise direction.

Second subset of regions 1b, 1d, 1f, 1h, 1j, 1l, 1n, 1p, 1r are provided in order across the full height of the security document running parallel and adjacent to the first subset of regions. Each region of this second subset is provided with a relief structure formed of recesses that each has a width of 8 µm, a depth of 0.5 µm and a distance between each recess of 8 µm, that is, having the dimensions of the recesses of the second region in the second embodiment. The second region 1b is provided with the elongate trough shaped recesses 21b extending at an approximately 135° angle to the long axis of the security document, or mirroring the orientation of the recesses in the first region. The fourth region 1d, which is provided adjacent the second region 1b, has its elongate trough shaped recesses 21d extending at an approximately 146° angle to the long axis of the note, or angularly offset in an anti-clockwise direction with respect to the second region 1b by approximately 11° and mirroring the orientation of the recesses of the third region 1c. This continues across the sixth 1f, eight 1h, tenth 1j, twelfth 1l, fourteenth 1n, sixteenth 1p and eighteenth 1r regions, with each region having elongate trough shaped recesses that are angularly offset with respect to the previous region by approximately 11° in an anti-clockwise direction.

While the colour-shift effect exhibited by the first subset of regions 1a, 1c, 1e, 1g, 1i, 1k, 1m, 1o, 1q will be substantially the same at all angles, when the security device 1 is viewed in reflection , each of the first subset of regions will replay in a different direction of tilt owing to the angular offset of the regions and the way the diffractive effect produced by the relief structure depends on the azimuthal angle of the diffraction grating as well as the tilt angle of the security device 1. Similarly for the second subset of regions 1b, 1d, 1f, 1h, 1j, 1l, 1n, 1p, 1r, the colour-shift effect exhibited will be substantially the same at all angles, but when the security device 1 is viewed in reflection and tilted in any direction, each of the second subset of regions will replay in a different direction of tilt, again owing to the angular offset of the regions and the way the diffractive effect produced by the relief structure depends on the azimuthal angle of the diffraction grating and the tilt angle of the security device 1. Furthermore, the first and second subsets will appear different from one another owing to the different thickness of colour-shifting coating structure in their respective recesses and the different diffractive effects produced by the respective diffraction grating profiles.

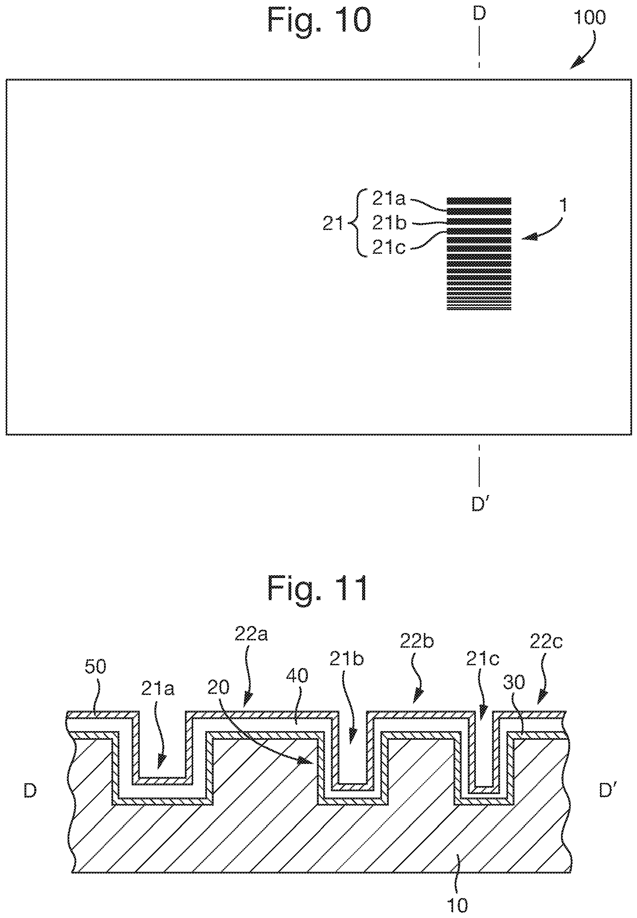

A sixth embodiment will now be described with respect to Figures 10 and 11.

The security document 100 is provided with a security device 1 having a relief structure across its surface. The relief structure 20 comprises a series of regularly spaced, square-profiled, elongate, trough-shaped recesses 21a, 21b, 21c, which are recessed with respect to a corresponding series of land 22a, 22b, 22c areas on the surface of the substrate 10. In this embodiment, the pitch of the recesses decreases gradually from one side of the security device to the other. Three recesses are shown in cross-section along line D-D' in Figure 11. The first recess 21a has a depth of 0.7 µm and a width of 10 µm, while the first land area 22a adjacent the first recess has a width of 10 µm. The second recess 21b lies adjacent the first land area 22a and has a depth of 0.7 µm and a width of 9.99 µm. The second land area 22b, adjacent the second recess has a width of 9.99 µm. The third recess 21c lies adjacent the second land area 22b and has a depth of 0.7 µm and a width of 9.98 µm. The third land area 22c, adjacent the third recess has a width of 9.98 µm.

As has been described above, the differing aspect ratios of these recesses 21 causes the optical spacer layer 40 to be received in the recesses with different thicknesses, thereby providing the final colour-shifting coating structure with a gradually decreasing thickness across the recesses of the security device 1. The colour shifting coating in the land areas will also vary by the mechanism described above. When the security device is viewed in reflection, the gradually changing average thicknesses of the colour-shifting coating structure in the recesses of the relief structure 20 and on the land areas will provide the security device with a colour-shift effect that appears as gradually varying colour across the security device. This colour-shift will be exhibited simultaneously with a diffractive effect produced by the grating structure, as above.

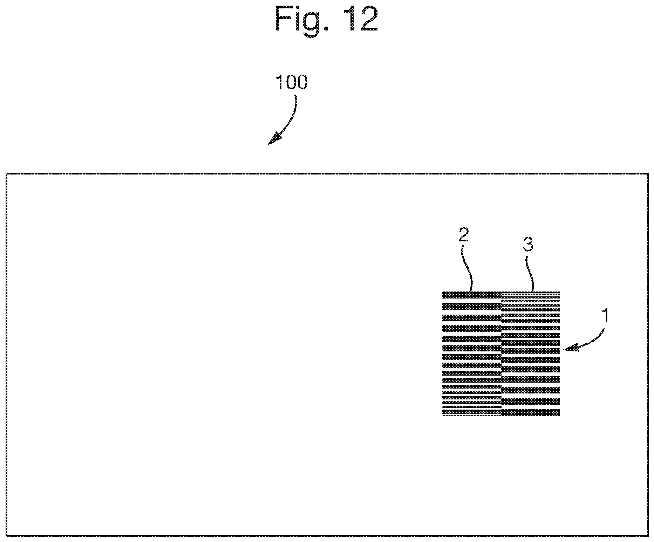

A seventh embodiment is shown in Figure 12. In this embodiment, the security device 1 has two distinct halves 2, 3. The first half 2 is formed substantially as described with respect to the sixth embodiment. That is, it comprises a series of regularly spaced, square-profiled, elongate, trough-shaped recesses that gradually decrease in pitch from a first side of the security device to the second side opposite the first side. The second half 3 comprises the same relief structure of regularly spaced, square-profiled, elongate, trough-shaped recesses that gradually decrease in pitch across the device 1, but the pitch decreases from the second side of the security device to the first, so that the second half appears flipped in orientation with respect to the first half 2. When this security device is viewed in reflection and tilted, the colour-shift will appear to progress in opposite directions across the security device in the first and second halves 2, 3.

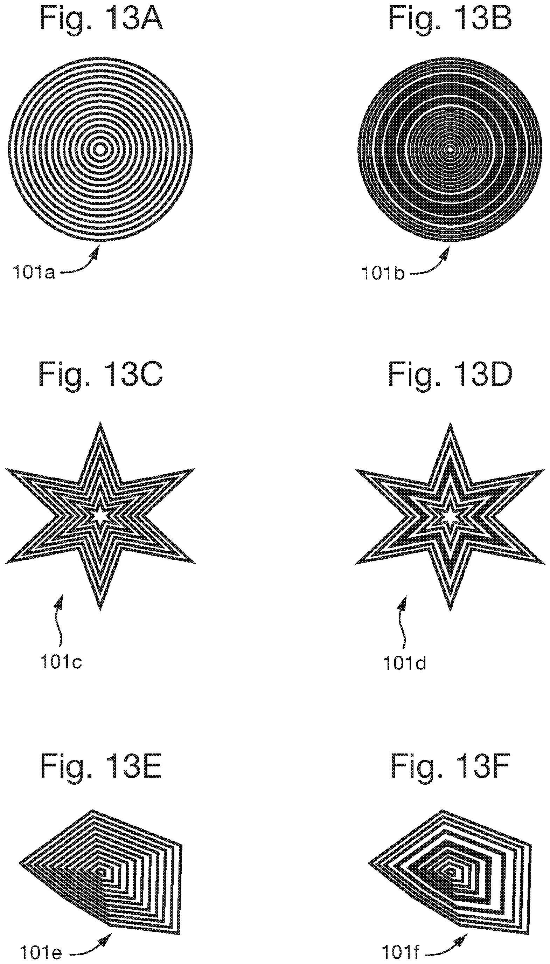

Eighth to thirteenth embodiments will now be described with respect to Figures 13A to 13F.

In the preceding embodiments, the relief structure has been shown and described as a regular array of parallel, linear, square-profiled, elongate, trough-shaped recesses. However, more complex relief structure designs may be used as desired.

Figure 13A shows a security device 101a wherein the relief structure is comprised of a series of curvilinear, specifically annular, recesses arranged concentrically to form a circle. In this embodiment, the recesses each have the same depth, width and pitch, and therefore have the same aspect ratio, resulting in the same thickness of colour-shifting coating structure being present in the recesses, giving the security device a single colour appearance.

Figure 13B shows a security device 101b wherein the relief structure is comprised of a series of curvilinear recesses arranged concentrically to form a circle, but wherein the pitch, and therefore the aspect ratio, of the recesses varies across the security device. When viewed in reflection, the security device will exhibit a colour-shift effect that varies across the security device in correspondence with the varying pitch of the recesses (owing to the effect this has on the thickness of the colour-shifting coating structure).

Figure 13C shows a security device 101c wherein the relief structure is formed of a series of concentric recesses describing a star shape. In this embodiment, the recesses each have the same depth, width and pitch, and therefore have the same aspect ratio, resulting in the same thickness of colour-shifting coating structure being present in the recesses, giving the security device a single colour appearance. Figure 13D, shows a security device 101d with the same arrangement of recesses as in the embodiment of Figure 13C, but wherein the pitch, and therefore the aspect ratio, of the recesses varies across the security device. Again, the security device will exhibit a colour-shift effect that varies across the security device in correspondence with the varying pitch of the recesses (owing to the effect this has on the thickness of the colour-shifting coating structure).

Figure 13E and 13F show further security devices in which the recesses describe an irregular polygon, with the security device 101e of Figure 13E showing the recesses with constant pitch and the security device 101f of Figure 13F showing the recesses varying in pitch across the security device. Again, these will exhibit a single colour-shift effect and a varying colour shift effect across their respective security devices.

In the embodiments shown in 13A to 13F, the recesses may additionally produce a diffractive effect, depending on their scale, that will be visible simultaneously with the colour-shift effect and contribute to the final colour appearance of the device.

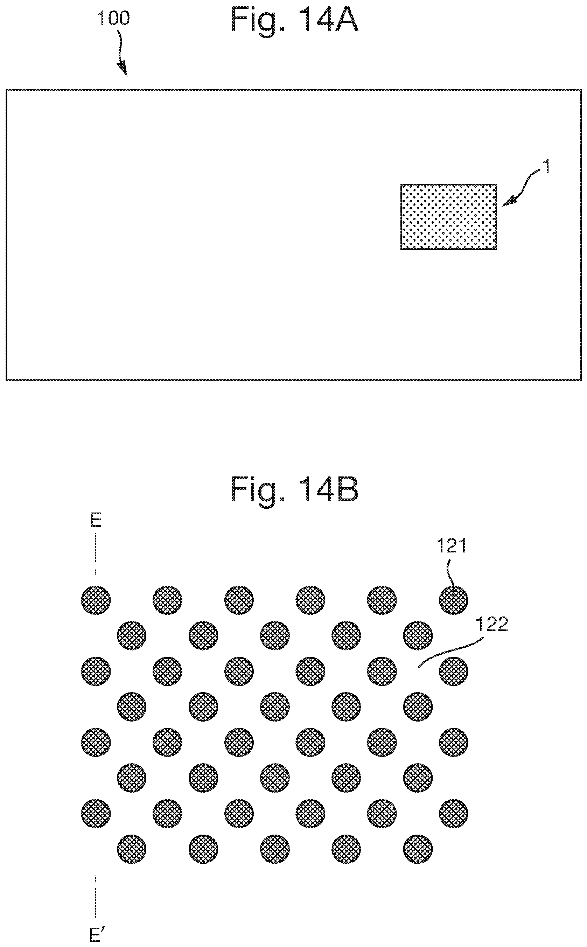

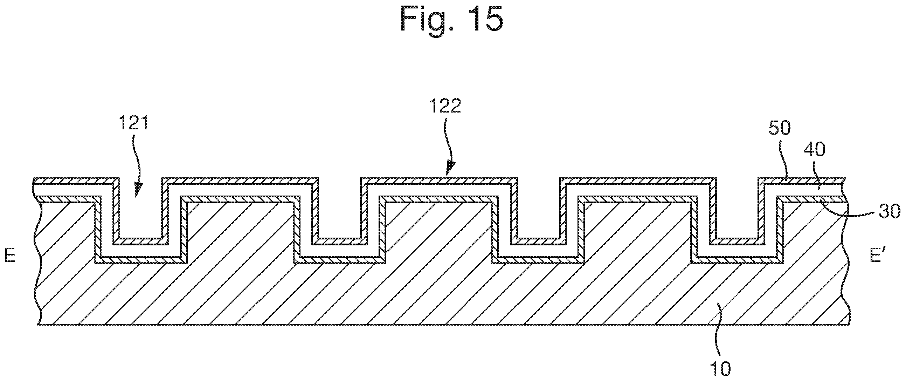

A fourteenth embodiment will now be described with reference to Figures 14A, 14B and 15.

Figure 14A shows a security document 100 having a security device 1 (shown enlarged in Figure 14B) that produces a colour-shifting effect on one surface. In this embodiment, instead of being provided with a relief structure that is a grating structure formed by elongate, square-profiled recesses, the security device comprises a substrate provided with a relief structure formed as an array of cylindrical recesses in the surface of the substrate 10. In this case, the cylindrical recesses are arranged in accordance with a grid structure, in particular, the recesses are arranged in accordance with a regular, repeating lattice structure on the surface of the substrate; however any regular or irregular arrangement may be used.

The security device is shown in Figure 15 in cross-section along line E-E'. The relief structure in the surface 10 is formed as an array of recesses 121 recessed with respect to a surrounding land area 122. The colour-shifting coating structure comprising the reflector layer 30, the optical spacer layer 40 and the absorber layer 50 is applied in the same manner as in the preceding embodiments, e.g. by slot die. The cylindrical recesses in the surface of the substrate exhibit the same inefficient filling of optical spacer layer 40 as in the previous embodiments comprising square-profiled, elongate recesses. Accordingly, when the completed security device is viewed in reflection, each cylindrical recess will exhibit a colour that is dependent on its aspect ratio owing to the way this affects the thickness of the optical spacer layer received therein. The land area 122 of the security device will exhibit a different colour from the recesses, as the optical spacer layer is received on the land area having a greater thickness. The resultant appearance of the security device will be an average of the colours exhibited by the recesses 121 and the land areas 122. While in the present example, recesses of a single size and shape are arranged homogeneously on the surface of the substrate to produce a security device that appears as one single colour, it will be appreciated that different aspect ratio recesses may be used, and they may be arranged in any regular or irregular manner, as desired, to provide the security device with a more complex appearance.

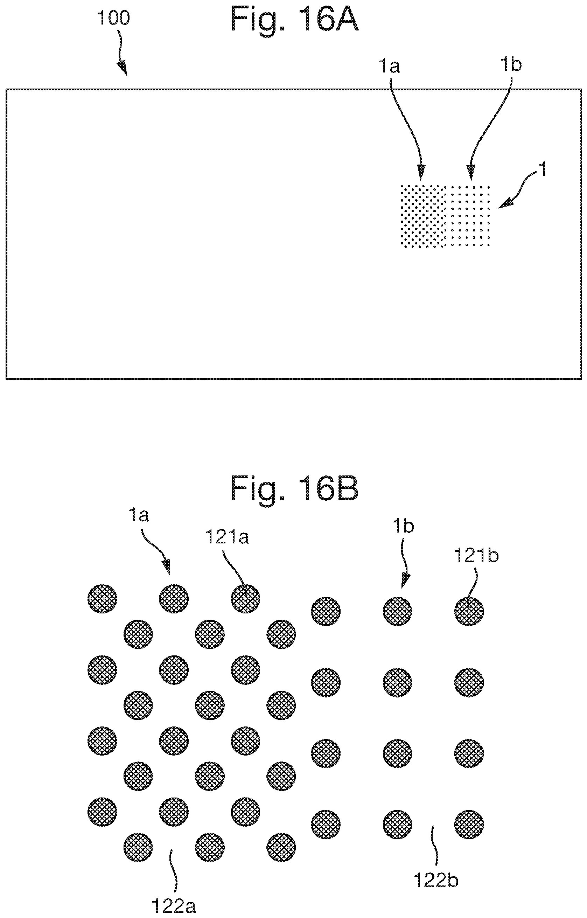

A fifteenth embodiment will now be described with reference to Figures 16A and 16B.

Figure 16A shows a security document 100 having a security device 1 (shown enlarged in Figure 16B) that produces a colour-shifting effect on one surface. In this embodiment, the security device again comprises a substrate provided with a relief structure formed as an array of cylindrical recesses in the surface of the substrate 10. In this embodiment, the device comprises first and second regions 1a, 1b. In the first region 1a, an array of cylindrical recesses 121a is provided with the same regular repeating lattice structure as in the fourteenth embodiment, while in the second region 1b, an array of cylindrical recesses 121b is provided with a regular repeating lattice structure that is different from that in the first region. The repeating lattice structure in the second region 1b increases the proportion of the surface area in the second region that is made up by land area 122b, as compared with the proportion of the surface area in the first region 1a made up by land area 122a. With a smallest distance between the recesses in the first region 1a of approximately 25 µm, the land area 122a and 122b will both have colour-shifting coating structure of substantially the same thickness, and each cylindrical recess 121a, 121b will have substantially the same thickness of colour-shifting coating structure (that is less than on the land areas 122a, 122b). The first and second regions will therefore have a different colour-shifting appearance. The different colour-shifting appearance results as the appearance of the first region will depend on the weighted average of the colour-shift effect exhibited by the land area 122a and the cylindrical recesses 121a, while the appearance of the second region will depend on the weighted average of the colour-shift effect exhibited by the land area 122b and the cylindrical recesses 121b, with these weighted averages being different owing to the different proportion of land areas to recesses between the two regions.

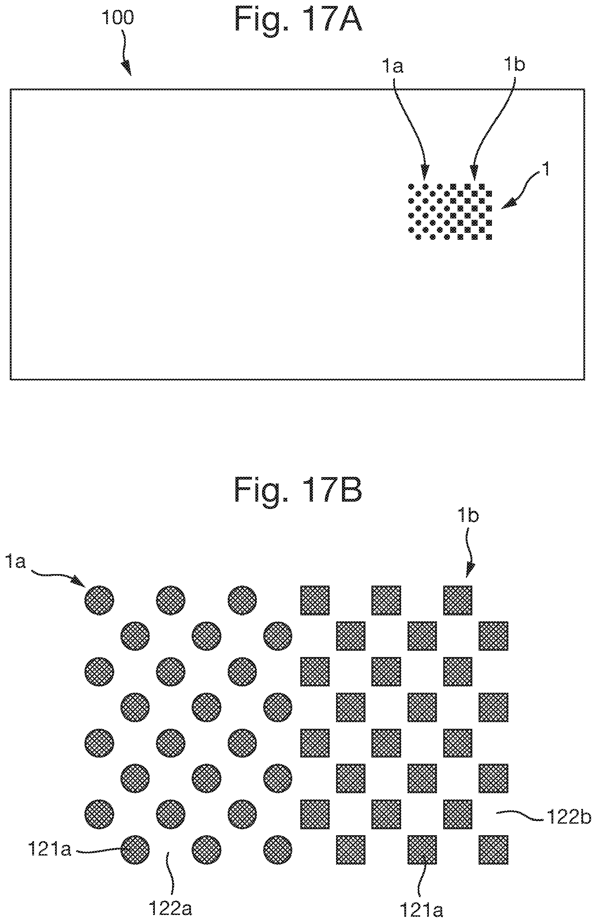

A sixteenth embodiment will now be described with reference to Figures 17A and 17B.

Figure 17A shows a security document 100 having a security device 1 (shown enlarged in Figure 17B) that produces a colour-shifting effect on one surface. In this embodiment, the relief structure is provided in two distinct regions 1a, 1b. In the first region 1a, the relief structure comprises an array of cylindrical recesses 121a in the surface of the substrate. In this case, the cylindrical recesses are arranged in the same regular, repeating lattice structure as in the fourteenth embodiment. In the second region 1b, the relief structure comprises an array of cuboidal recesses 121b in the surface of the substrate. The cuboidal recesses of the second region are arranged in the same regular, repeating lattice structure as in the first region. The different form (i.e. shape) of the recesses in the first and second regions 1a, 1b results in them receiving the colour-shifting coating structure with a different average thickness. Hence, the cylindrical recesses 121a will exhibit a colour-shift effect that is different from the colour-shift effect exhibited by the cuboidal recesses, with the overall appearance of the first and second regions being different as a result.

The above embodiments demonstrate how the spacing and form of the recesses and width of the land areas can be used to control the overall appearance of a region. It will be appreciated that different width land areas, and different spacings and different forms of recesses can be used separately or in combination. Further, the spacing and/or form can be configured to vary, preferably gradually, across a region. For example, cylindrical recesses may morph into cuboidal recesses across the device and/or the spacing of the recesses may gradually increase or decrease across the device to provide for more complex appearances of the final device.

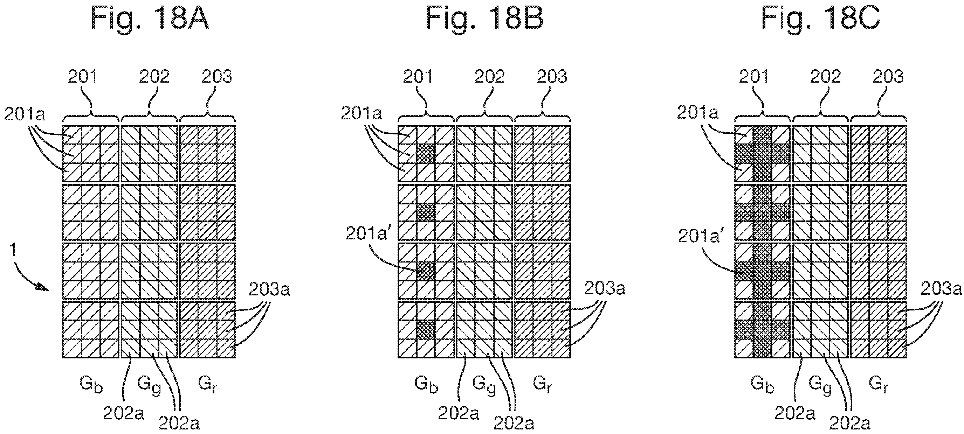

Seventeenth to nineteenth embodiments will now be described with respect to Figures 18A to 18C.

Figure 18A shows an enlarged portion of a security device 1 in plan view in which large blue, green and red coloured regions are visible to a viewer. An array of regions are provided 201a, 202a, 203a across the surface of the device. Each region comprises a relief structure coated with colour-shifting structure in accordance with the above teachings. A first subset of the regions 201a are configured such that the overall appearance of each region, when viewed in reflected light close to the normal, is blue. This will typically be provided by configuring the recesses to receive thin coatings of colour-shifting structure, which produce constructive interference around 460 nm when viewed close to the normal, and providing the relief structure with a low proportion of land areas such that this blue colour-shift dominates the weighted average colour-shift across the regions. These first regions 201a provide a blue colour channel 201 in a full-colour image. A second subset of the regions 202a are configured such that the overall appearance of each region when viewed in reflected light close to the normal is green. This will typically be provided by configuring the recesses to receive a coating that is thicker than those in the first regions 201a of colour-shifting structure such that they produce constructive interference around 540 nm, when viewed close to the normal, with again a relief structure having a low proportion of land areas to achieve a suitable weighted average. These second regions 202a provide a green colour channel 202 in a full-colour image. Finally, a third subset of the regions 203a are configured such that the overall appearance of each region when viewed in reflected light close to the normal is red. This may be provided using recesses configured to receive a relatively thick coating of colour-shifting structure, i.e. one that produces constructive interference around 700 nm when viewed close to the normal, or by providing the third subset of the regions 203a as neutral regions which receive a coating of colour-shifting structure that produces constructive interference around 700 nm when viewed close to the normal. These third regions provide a red colour channel 203 in a full-colour image. In Figure 17A, the regions 201a, 202a and 203a are shown forming separate blue, green and red regions; however, it will be appreciated that the regions 201a, 202a and 203a can be provided in accordance with more complex designs, for example, with each region or a group of regions corresponding to a pixel in a full-colour image.

Figure 18B shows an enlarged portion of a security device 1 in plan view. The security device is substantially the same as that in Figure 18A, but is provided with a number of regions 201a' that exhibit a reduced colour-shift effect. This may be provided by using a relief structure which receives the colour-shifting coating structure having a very small thickness, i.e. one that generates interference at short wavelengths outside of the visible spectrum, as in the embodiment of Figure 6, described above, and thereby exhibits a dampened or metallic appearance. Alternatively, a reduced colour-shift region may be provided by providing the relief structure as a moth-eye structure. In the embodiment of Figure 18B one pixel of an image corresponds to nine of the first subset of regions 201a. Figure 18B shows a blue region of an image in which there is one reduced colour-shift region 201a' for every eight of the first subset of regions 201a, resulting in a dampened or darker blue overall appearance in the corresponding region of the device. The use of reduced colour-shift regions 201a', particularly where they produce a metallic appearance, may be used to introduce grey levels into a full-colour image.

Figure 18C shows an enlarged portion of a security device 1 in plan view. The security device is substantially the same as that in Figure 18B, but in the blue region of the image is provided with five reduced colour-shift regions 201a' for every four the first subset of regions 201a, thereby generating an even darker blue than in the security device of Figure 18B.

It will be appreciated that complex images may be produced by configuring the arrangement of the various regions that exhibit blue, green, red and reduced colour-shift effects. For example, a yellow pixel may be provided by arranging together a number of green and red regions, optionally with one or more reduced colour-shift regions. Full-colour images can thereby be provided with only three or four different relief structure designs suitably distributed in a two-dimensional array. As an alternative, regions may be provided corresponding to pixels of a final image, with each region having a relief structure individually configured to produce the desired colour-shift effect; however, in this case, many different relief structure designs would be required to form any full-colour image.

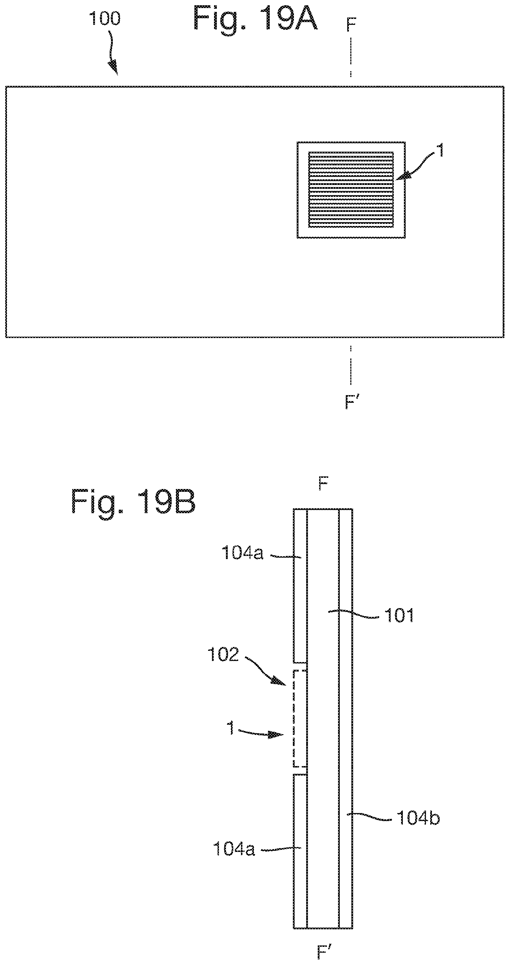

Examples of security documents incorporating security devices according to the above embodiments will now be described with respect to Figures 19A to 21C.

Figures 19A and 19B show an exemplary security document 100, here a banknote, in plan view and cross-section along line F-F'. Here, the banknote 100 is a polymer banknote, comprising an internal transparent polymer substrate 101 which is coated on each side with opacifying layers 104a and 104b in a conventional manner. In some cases, the opacifying layers may be provided on one side of the substrate 101 only. The opacifying layer 104a is omitted in a region of the document on one side so as to define a half-window 102, here having a square shape. Within the window region 102 is located a security device 1 in accordance with any of the embodiments discussed above. The security device 1 may be formed integrally in the banknote 100 with the relief structure being formed directly in the surface of transparent substrate 101. Alternatively, the security device 1 may have been formed separately as a security article such as a transfer stripe, a patch, or a label. In this case, the security device 1 may be affixed to the transparent substrate 101 inside the window region 102 by means of a transparent adhesive. Application may be achieved by a hot or cold transfer method e.g. hot stamping.

It should be noted that a similar construction could be achieved using a paper/plastic composite banknote in which the opacifying layers 104a and 104b are replaced by paper layers laminated (with or without adhesive) to an internal transparent polymer layer 101. The paper layers may be omitted from the window region from the outset, or the paper could be removed locally after lamination. In other constructions, the order of the layers may be reversed with a (windowed) paper layer on the inside and transparent polymer layers on the outside.

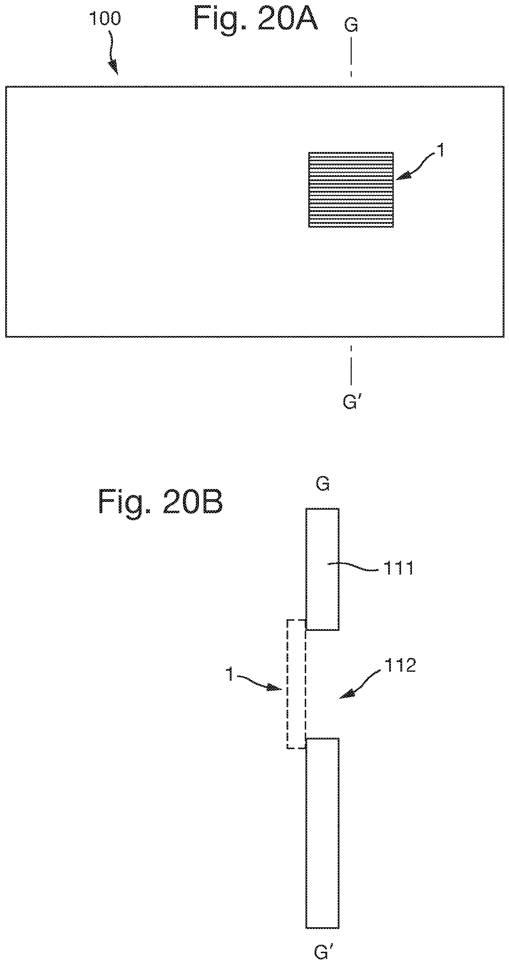

Figures 20A and 20B show another exemplary security document, here a banknote 100, in plan view and cross-section along line G-G' respectively. The banknote 100 is of conventional construction having a substrate 111 formed for example of paper or other relatively opaque or translucent material. A full window region 112 is formed as an aperture through the substrate 111. The security device 1 is applied as a patch overlapping the edges of window 112 utilising transparent adhesive to join the edges of the security article to the document substrate 111. Again, the application of the security device and document could be achieved using various methods including hot stamping.

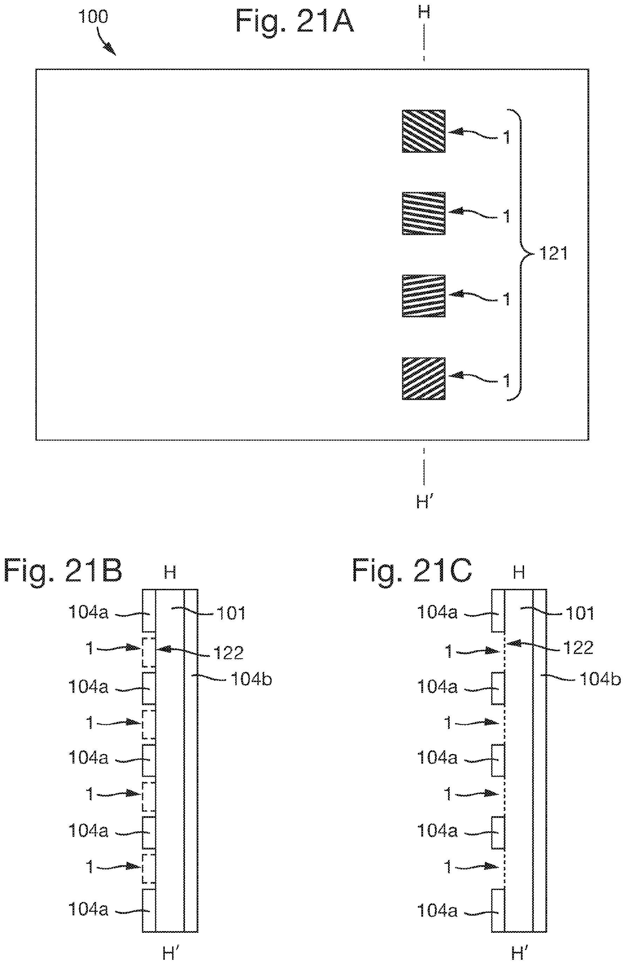

Figures 21A to 21C depict another example of a security document 100, again a banknote, to which a security article 121 in the form of a security thread or security strip has been applied. Four security devices 1 are revealed through windows 122, arranged in a line on the document. Two alternative constructions of the document are shown in cross-section in Figures 21B and 21C. Figure 21B depicts the security thread or strip as four separate security devices individually applied to the surface of the transparent substrate 103 in respective windows 122. Alternatively, the security thread or strip may be formed as a single device and applied to the surface of the a transparent substrate prior to application of the opacifying layer, or, for paper banknotes, incorporated within the substrate's structure during the paper making process using well known techniques. To form the windows 122 in a paper banknote, the paper may be removed locally after completion of the paper making process, e.g. by abrasion, leaving opacifying regions between the windows. Alternatively, the paper making process could be designed so as to omit paper in the desired window regions. Figure 21C shows an alternative arrangement in which four security devices 1 are formed in the surface of the transparent substrate 103 and opacifying layers applied so as to leave the security devices visible in window regions 122.

In the above examples described with respect to Figures 19A to 21C, the security device is provided in windows or half-windows of a security document. However, it will be appreciated that, as the device is to be viewed primarily in reflected light, it could alternatively be applied to an opaque substrate such as a paper substrate or an opacifying on a polymer banknote. In this case it would be applied in a conventional manner as a transfer stripe, patch or label with application achieved as described above.

The above described security devices could alternatively be applied to or formed directly on other types of security document including identification cards, driving licenses, bankcards and other value documents.

## Claims

1. A method of producing a security device (1), comprising:
providing a substrate (10) having a relief structure (20) in or on its surface, the relief structure being provided in a first region of the substrate, the relief structure in the first region having a first recess or a plurality of first recesses (21) in or on the surface of the substrate, the first recess or recesses being recessed with respect to one or more corresponding first land areas (22) of the first region in or on the surface of the substrate; and
applying a coating of a colour-shifting structure (30,40,50 to the relief structure such that the coating of the colour-shifting structure is received in the first recess or recesses of the first region and on the one or more first land areas and **characterised in that** a thickness (t) of the coating of the colour-shifting structure in the first recess or recesses is greater than or less than a thickness of the coating of the colour-shifting structure on the one or more first land areas.

2. A method according to claim 1, wherein, at least at one viewing angle, the coating of the colour-shifting structure in the first recess or recesses exhibits a first recess colour and the coating of the colour-shifting structure on the one or more first land areas exhibits a first land colour different from the first recess colour.

3. A method according to claim 1 or claim 2, comprising providing the substrate additionally with one or more neutral regions in or on its surface, the one or more neutral regions having substantially no relief structure, and further comprising applying the coating of the colour-shifting structure additionally to the one or more neutral regions of the substrate, wherein preferably a thickness of the coating of the colour-shifting structure in the first recess or recesses is less than a thickness of the coating of the colour-shifting structure in the one or more neutral regions.

4. A method according to any of the preceding claims, wherein the relief structure is additionally provided in a second region of the substrate, the relief structure in the second region having a second recess or a plurality of second recesses in or on the surface of the substrate, the second recess or recesses being recessed with respect to one or more corresponding second land areas of the second region in or on the surface of the substrate, and comprising applying the coating of the colour-shifting structure to the relief structure such that it is additionally received in the second recess or recesses of the second region and on the one or more second land areas such that a thickness of the coating of the colour-shifting structure in the second recess or recesses is greater than or less than a thickness of the coating of the colour-shifting structure on the one or more second land areas, wherein preferably each of the first recess or recesses has a first form, and each of the second recess or recesses has a second form different from the first form, and wherein a thickness of the coating of the colour-shifting structure in the second recess or recesses is less than the thickness of the coating of the colour-shifting structure in the first recess or recesses, and wherein most preferably each of the first recess or recesses and each of the second recess or recesses has the same depth.

5. A method according to claim 4, wherein the first recess or recesses have a first recess profile, the first recess profile having a first aspect ratio defined as a depth of said first recess profile divided by a width of said first recess profile, wherein the second recess or recesses have a second recess profile, the second recess profile having a second aspect ratio defined as a depth of said second recess profile divided by a width of said second recess profile, the second aspect ratio being greater than the first aspect ratio, and wherein a thickness of the coating of the colour-shifting structure in the second recess or recesses is less than the thickness of the coating of the colour-shifting structure in the first recess or recesses, wherein preferably the depth of first recess profile is the same as the depth of the second recess profile, and wherein the width of the first recess profile is different from the width of the second recess profile.

6. A method according to claim 4 or claim 5, wherein a width of the one or more first land areas is different from a width of the one or more second land areas, wherein the coating of the colour-shifting structure is received on the one or more first land areas of the first region and on the one or more second land areas of the second region such that a thickness of the coating of the colour-shifting structure on the one or more first land areas is different from a thickness of the coating of the colour-shifting structure on the one or more second land areas.

7. A method according to any of the preceding claims, wherein applying a coating of the colour-shifting structure to the relief structure comprises applying the coating of the colour-shifting structure using a first set of processing conditions, and/or comprises applying the coating of the colour-shifting structure so as to be substantially continuous on at least the relief structure.

8. A method according to any of the preceding claims, wherein the first recess or recesses have a first depth and comprising applying the coating of the colour-shifting structure with a thickness that is less than the depth of the first recess or recesses.

9. A method according to any of the preceding claims, wherein the coating of the colour-shifting structure comprises at least a reflector layer comprising an at least partially reflective material, an optical spacer layer and an absorber layer comprising a partially reflective material, wherein preferably applying the coating of the colour-shifting structure comprises applying the reflector layer, optical spacer layer and absorber layer over the relief structure in separate application steps, and/or preferably comprising applying the optical spacer layer using a wet coating process, such as applying the optical spacer layer using a slot die or rotogravure process.

10. A method according to any of the preceding claims, wherein the thickness of the coating of the colour-shifting structure in the first recess or recesses is such that, when viewed in reflection, the coating of the colour-shifting structure generates constructive interference in reflected light only at wavelengths less than 400 nm.

11. A method according to any of the preceding claims, wherein the plurality of first recesses are provided in accordance with a first grid structure, wherein preferably the pitch of the first grid structure is not less than 1 µm, preferably not less than 3 µm, and/or wherein preferably the pitch of the first grid structure does not exceed 50 µm, preferably does not exceed 10 µm, and/or wherein the plurality of first recesses are provided in accordance with a first grating structure, wherein preferably the first grating structure is a first square-profiled grating structure and/or a first diffraction grating structure, and wherein preferably the second recess or recesses, if provided, are provided in accordance with a second grid structure or second grating structure, wherein further preferably the second grid structure or second grating structure is angularly offset with respect to the first grid structure or first grating structure.

12. A method according to any of the preceding claims, wherein the relief structure is a diffractive relief structure, or forms a Fresnel lens relief structure or a zone plate structure.

13. A method according to any of the preceding claims, wherein the first recess or recesses have a first recess profile having a first aspect ratio defined as a depth of said first recess profile divided by a width of said first recess profile and wherein the first aspect ratio has a value in the range of 0.02 to 0.3, preferably in the range of 0.1 to 0.25.

14. A method according to any of the preceding claims, wherein each of the first recess or recesses has a depth not greater than 50 µm, preferably not greater than 20 µm, more preferably not greater than 10 µm, most preferably not greater than 5 µm, and/or wherein each of the first recess or recesses has a width not greater than 100 µm, preferably not greater than 50 µm, more preferably not greater than 20 µm, most preferably not greater than 10 µm.

15. A security device (1) comprising:
a substrate (10) having a relief structure (21) in or on its surface, the relief structure being in a first region of the substrate;
the relief structure in the first region having a first recess or a plurality of first recesses (21) in or on the surface of the substrate, the first recess or recesses being recessed with respect to one or more corresponding first land areas (22) in or on the surface of the substrate; and
a coating of a colour-shifting structure (30,40,50) on the relief structure in the first recess or recesses and on the one or more first land areas; **characterised in that**
a thickness (t) of the coating of the colour-shifting structure in the first recess or recesses is greater than or less than a thickness of the coating of the colour-shifting structure on the one or more first land areas.

## Patentansprüche

1. Verfahren zur Herstellung einer Sicherheitsvorrichtung (1), umfassend:
Bereitstellen eines Substrats (10) mit einer Reliefstruktur (20) in oder auf seiner Oberfläche, wobei die Reliefstruktur in einem ersten Bereich des Substrats vorgesehen ist, wobei die Reliefstruktur im ersten Bereich eine erste Ausnehmung oder eine Mehrzahl von ersten Ausnehmungen (21)
in oder auf der Oberfläche des Substrats aufweist, wobei die erste Ausnehmung oder ersten Ausnehmungen gegenüber einer oder mehreren entsprechenden ersten Erhebungsfläche(n) (22) des ersten Bereichs in oder auf dem Substrat vertieft ist bzw. sind; und
Auftragen einer Beschichtung aus einer farbverändernden Struktur (30, 40, 50) auf die Reliefstruktur, so dass die Beschichtung aus der farbverändernden Struktur in der ersten Ausnehmung bzw. Ausnehmungen des ersten Bereichs und auf der einen oder den mehreren Erhebungsfläche(n) aufgenommen ist
**dadurch gekennzeichnet, dass**
eine Dicke (t) der Beschichtung aus der farbverändernden Struktur in der ersten Ausnehmung bzw. Ausnehmungen größer als oder geringer als eine Dicke der Beschichtung aus der farbverändernden Struktur auf der einen oder den mehreren Erhebungsfläche(n) ist.

2. Verfahren nach Anspruch 1, wobei die Beschichtung aus der farbverändernden Struktur in der ersten Ausnehmung bzw. Ausnehmungen zumindest bei einem Betrachtungswinkel eine erste Ausnehmungsfarbe aufweist und die Beschichtung aus der farbverändernden Struktur auf der einen oder den mehreren Erhebungsfläche(n) eine erste Erhebungsfarbe aufweist, die sich von der ersten Ausnehmungsfarbe unterscheidet.

3. Verfahren nach Anspruch 1 oder Anspruch 2, welches umfasst, das Substrat zusätzlich mit einer oder mehreren neutralen Bereichen in oder auf seiner Oberfläche zu versehen, wobei der eine oder die mehreren neutralen Bereiche im Wesentlichen keine Reliefstruktur aufweisen, und welches weiters umfasst, die Beschichtung aus der farbverändernden Struktur zusätzlich auf den einen oder die mehreren neutralen Bereich(e) des Substrats aufzutragen, wobei eine Dicke der Beschichtung aus der farbverändernden Struktur in der ersten Ausnehmung bzw. Ausnehmungen bevorzugt geringer als eine Dicke der Beschichtung aus der farbverändernden Struktur in dem einen oder den mehreren neutralen Bereich(en) ist.

4. Verfahren nach einem der vorhergehenden Ansprüche, wobei die Reliefstruktur zusätzlich in einem zweiten Bereich des Substrats vorgesehen ist, wobei die Reliefstruktur im zweiten Bereich eine zweite Ausnehmung oder eine Mehrzahl von zweiten Ausnehmungen in oder auf der Oberfläche des Substrats aufweist, wobei die zweite Ausnehmung bzw. Ausnehmungen gegenüber einer oder mehreren entsprechenden Erhebungsfläche(n) des zweiten Bereichs in oder auf der Oberfläche des Substrats vertieft ist, und umfassend das Auftragen der Beschichtung aus der farbverändernden Struktur auf die Reliefstruktur, so dass die Beschichtung aus der farbverändernden Struktur zusätzlich in der zweiten Ausnehmung bzw. Ausnehmungen des zweiten Bereichs und auf der einen oder den mehreren zweiten Erhebungsfläche(n) derart aufgenommen ist, dass eine Dicke der Beschichtung aus der farbverändernden Struktur in der zweiten Ausnehmung bzw. Ausnehmungen größer als oder geringer als eine Dicke der Beschichtung aus der farbverändernden Struktur auf der einen oder den mehreren Erhebungsfläche(n), wobei bevorzugt jede der ersten Ausnehmung bzw. Ausnehmungen eine erste Form aufweist und jede der zweiten Ausnehmung bzw. Ausnehmungen eine zweite Form aufweist, die sich von der ersten Form unterscheidet, und wobei eine Dicke der Beschichtung aus der farbverändernden Struktur in der zweiten Ausnehmung bzw. Ausnehmungen geringer ist als die Dicke der Beschichtung aus der farbverändernden Struktur in der ersten Ausnehmung bzw. Ausnehmungen, und wobei besonders bevorzugt jede der ersten Ausnehmung bzw. Ausnehmungen und jede der zweiten Ausnehmung bzw. Ausnehmungen die gleiche Tiefe aufweisen.

5. Verfahren nach Anspruch 4, wobei die erste Ausnehmung bzw. Ausnehmungen ein erstes Ausnehmungsprofil aufweist, wobei das erste Ausnehmungsprofil ein erstes Seitenverhältnis aufweist, das definiert ist als eine Tiefe des ersten Ausnehmungsprofils geteilt durch eine Breite des ersten Ausnehmungsprofils, wobei die zweite Ausnehmung bzw. Ausnehmungen ein zweites Seitenverhältnis aufweisen, das definiert ist als eine Tiefe des zweiten Ausnehmungsprofils geteilt durch eine Breite des zweiten Ausnehmungsprofils, wobei das zweite Seitenverhältnis größer als das erste Seitenverhältnis ist und wobei eine Dicke der Beschichtung aus der farbverändernden Struktur in der zweiten Ausnehmung bzw. Ausnehmungen geringer ist als die Dicke der Beschichtung aus der farbverändernden Struktur in der ersten Ausnehmung bzw. Ausnehmungen, wobei die Tiefe des ersten Ausnehmungsprofils bevorzugt gleich der Tiefe des zweiten Ausnehmungsprofils ist und wobei die Breite des ersten Ausnehmungsprofils sich von der Breite des zweiten Ausnehmungsprofils unterscheidet.

6. Verfahren nach Anspruch 4 oder Anspruch 5, wobei sich eine Breite der einen oder der mehreren ersten Erhebungsfläche(n) von einer Breite der einen oder der mehreren zweiten Erhebungsfläche(n) unterscheidet, wobei die Beschichtung aus der farbverändernden Struktur auf der einen oder der mehreren ersten Erhebungsfläche(n) des ersten Bereichs und auf der einen oder der mehreren zweiten Erhebungsfläche(n) des zweiten Bereichs derart aufgenommen ist, dass sich eine Dicke der Beschichtung aus der farbverändernden Struktur auf der einen oder den mehreren ersten Erhebungsfläche(n) von einer Dicke der Beschichtung aus der farbverändernden Struktur auf der einen oder der mehreren zweiten Erhebungsfläche(n) unterscheidet.

7. Verfahren nach einem der vorhergehenden Ansprüche, wobei das Auftragen einer Beschichtung aus der farbverändernden Struktur auf die Reliefstruktur ein Auftragen der Beschichtung aus der farbverändernden Struktur unter Verwendung einer ersten Reihe von Bearbeitungsbedingungen umfasst bzw. das im Wesentlichen kontinuierliche Auftragen der Beschichtung aus der farbverändernden Struktur auf zumindest der Reliefstruktur umfasst.

8. Verfahren nach einem der vorhergehenden Ansprüche, wobei die erste Ausnehmung bzw. Ausnehmungen eine erste Tiefe aufweisen und das Verfahren das Auftragen der Beschichtung aus der farbverändernden Struktur mit einer Dicke, die geringer als die Dicke der ersten Ausnehmung bzw. Ausnehmungen ist, umfasst.

9. Verfahren nach einem der vorhergehenden Ansprüche, wobei die Beschichtung aus der farbverändernden Struktur zumindest eine Reflektorschicht umfasst, die ein zumindest teilweise reflektierendes Material, eine optische Abstandhalterschicht und eine Absorberschicht umfasst, welche ein teilweise reflektierendes Material umfasst, wobei das Auftragen der Beschichtung aus der farbverändernden Struktur bevorzugt das Auftragen der Reflektorschicht, der optischen Abstandhalterschicht und der Absorberschicht über die Reliefstruktur in einzelnen Auftragsschritten umfasst bzw. bevorzugt umfassend das Auftragen der optischen Abstandhalterschicht unter Verwendung eines Nassbeschichtungsvorgangs, beispielsweise das Auftragen der optischen Abstandhalterschicht mithilfe eines Schlitzdüsen- oder Rotationstiefdruckprozes ses.

10. Verfahren nach einem der vorhergehenden Ansprüche, wobei die Dicke der Beschichtung aus der farbverändernden Struktur in der ersten Ausnehmung bzw. Ausnehmungen derart ist, dass die Beschichtung aus der farbverändernden Struktur bei Ansicht in Reflexion in reflektiertem Licht und nur bei Wellenlängen unter 400 nm eine konstruktive Interferenz erzeugt.

11. Verfahren nach einem der vorhergehenden Ansprüche, wobei die Mehrzahl von ersten Ausnehmungen entsprechend einer ersten Rasterstruktur vorgesehen ist, wobei der Abstand der ersten Rasterstruktur bevorzugt nicht weniger als 1 µm beträgt, bevorzugt nicht weniger als 3 µm, bzw. wobei der Abstand der ersten Rasterstruktur bevorzugt nicht mehr als 50 µm beträgt, bevorzugt nicht mehr als 10 µm beträgt, bzw. wobei die Mehrzahl von ersten Ausnehmungen entsprechend einer ersten Gitterstruktur vorgesehen ist, wobei die erste Gitterstruktur bevorzugt eine erste quadratisch profilierte Struktur bzw. eine erste Diffraktionsgitterstruktur ist, und wobei die zweite Ausnehmung bzw. Ausnehmungen, falls vorgesehen, entsprechend einer zweiten Rasterstruktur oder einer zweiten Gitterstruktur vorgesehen sind, wobei weiters die zweite Rasterstruktur oder zweite Gitterstruktur bevorzugt winklig gegenüber der ersten Rasterstruktur oder zweiten Gitterstruktur versetzt ist.

12. Verfahren nach einem der vorhergehenden Ansprüche, wobei die Reliefstruktur eine beugende Reliefstruktur ist oder eine Fresnellinsenreliefstruktur oder eine Zonenplattenstruktur bildet.

13. Verfahren nach einem der vorhergehenden Ansprüche, wobei die erste Ausnehmung bzw. Ausnehmungen ein erstes Ausnehmungsprofil mit einem ersten Seitenverhältnis aufweisen, welches Seitenverhältnis definiert ist als eine Tiefe des ersten Ausnehmungsprofils geteilt durch die Breite des ersten Ausnehmungsprofils und wobei das erste Seitenverhältnis einen Wert im Bereich von 0,02 bis 0,3, bevorzugt im Bereich 0,1 bis 0,25 aufweist.

14. Verfahren nach einem der vorhergehenden Ansprüche, wobei jede der ersten Ausnehmung bzw. Ausnehmungen eine Tiefe aufweist, die nicht größer als 50 µm ist, bevorzugt nicht größer als 20 µm, noch bevorzugter nicht größer als 10 µm, am bevorzugtesten nicht größer als 5 µm, bzw. wobei jede der ersten Ausnehmung bzw. Ausnehmungen eine Breite aufweist, die nicht größer als 100 µm ist, bevorzugt nicht größer als 50 µm, noch bevorzugter nicht größer als 20 µm, am bevorzugtesten nicht größer als 10 µm.

15. Sicherheitsvorrichtung (1), umfassend:
ein Substrat (10) mit einer Reliefstruktur (21) in oder auf seiner Oberfläche, wobei sich die Reliefstruktur in einem ersten Bereich des Substrats befindet;
die Reliefstruktur im ersten Bereich, die eine erste Ausnehmung oder eine Mehrzahl von ersten Ausnehmungen (21) in oder auf der Oberfläche des Substrats aufweist, wobei die erste Ausnehmung bzw. die ersten Ausnehmungen gegenüber einer oder mehreren entsprechenden ersten Erhebungsfläche(n) (22) in oder auf dem Substrat vertieft ist bzw. sind; und
eine Beschichtung aus der farbverändernden Struktur (30, 40, 50) auf der Reliefstruktur in der ersten Ausnehmung bzw. Ausnehmungen und auf der einen oder den mehreren ersten Erhebungsflächen;
**dadurch gekennzeichnet, dass**
eine Dicke (t) der Beschichtung aus der farbverändernden Struktur in der ersten Ausnehmung bzw. Ausnehmungen größer als oder geringer als eine Dicke der Beschichtung aus der farbverändernden Struktur auf der einen oder den mehreren Erhebungsfläche(n) ist.

## Revendications

1. Procédé de production d'un dispositif de sécurité (1), comprenant :
la fourniture d'un substrat (10) ayant une structure en relief (20) dans ou sur sa surface, la structure en relief étant disposée dans une première région du substrat, la structure en relief comportant, dans la première région, un premier évidement ou une pluralité de premiers évidements (21) dans ou sur la surface du substrat, le premier ou les premiers évidements étant en retrait par rapport à une ou plusieurs premières zones de plage (22) correspondantes de la première région dans ou sur la surface du substrat ; et
l'application d'une structure de revêtement à variation chromatique (30, 40, 50) à la structure en relief de telle sorte que la structure de revêtement à variation chromatique est reçue dans le premier ou les premiers évidements de la première région et sur les une ou plusieurs zones de plage, et
**caractérisé en ce qu'**une épaisseur (t) du revêtement de la structure à variation chromatique dans le premier ou les premiers évidements est supérieure ou inférieure à une épaisseur de la structure de revêtement à variation chromatique sur les une ou plusieurs premières zones de plage.

2. Procédé selon la revendication 1, dans lequel, au moins selon un angle de visualisation, le revêtement de la structure à variation chromatique dans le premier ou les premiers évidements présente une première couleur d'évidement et le revêtement de la structure à variation chromatique sur les une ou plusieurs premières zones de plage présente une première couleur de plage différente de la première couleur d'évidement.

3. Procédé selon la revendication 1 ou la revendication 2, comprenant la fourniture en outre au substrat d'une ou de plusieurs régions neutres dans ou sur sa surface, les une ou plusieurs régions neutres n'ayant sensiblement pas de structure en relief, et comprenant en outre l'application du revêtement de la structure à variation chromatique en outre sur les une ou plusieurs régions neutres du substrat, dans lequel une épaisseur du revêtement de la structure à variation chromatique dans le premier ou les premiers évidements est de préférence inférieure à une épaisseur du revêtement de la structure à variation chromatique dans les une ou plusieurs régions neutres.

4. Procédé selon l'une quelconque des revendications précédentes, dans lequel la structure en relief est en outre disposée dans une seconde région du substrat, la structure en relief dans la seconde région comportant un second évidement ou une pluralité de seconds évidements dans ou sur la surface du substrat, le second ou les seconds évidements étant en retrait par rapport à une ou plusieurs secondes zones de plage correspondantes de la seconde région dans ou sur la surface du substrat, et comprenant l'application du revêtement de la structure à variation chromatique à la structure en relief de telle sorte qu'il est en outre reçu dans le second ou les seconds évidements de la seconde région et sur les une ou plusieurs secondes zones de plage de telle sorte qu'une épaisseur du revêtement de la structure à variation chromatique dans le second ou les seconds évidements est supérieure ou inférieure à une épaisseur du revêtement de la structure à variation chromatique sur les une ou plusieurs secondes zones de plage, dans lequel chacun du premier ou des premiers évidements a de préférence une première forme, et chacun du second ou des seconds évidements a une seconde forme différente de la première forme, et dans lequel une épaisseur du revêtement de la structure à variation chromatique dans le second ou les seconds évidements est inférieure à l'épaisseur du revêtement de la structure à variation chromatique dans le premier ou les premiers évidements, et dans lequel de manière préférée entre toutes, chacun du premier ou des premiers évidements et chacun du second ou des seconds évidements a la même profondeur.

5. Procédé selon la revendication 4, dans lequel le premier ou les premiers évidements ont un premier profil d'évidement, le premier profil d'évidement ayant un premier rapport d'aspect défini comme une profondeur dudit premier profil d'évidement divisée par une largeur dudit premier profil d'évidement, dans lequel le second ou les seconds évidements ont un second profil d'évidement, le second profil d'évidement ayant un second rapport d'aspect défini comme une profondeur dudit second profil d'évidement divisée par une largeur dudit second profil d'évidement, le second rapport d'aspect étant supérieur au premier rapport d'aspect, et dans lequel une épaisseur du revêtement de la structure à variation chromatique dans le second ou les seconds évidements est inférieure à l'épaisseur du revêtement de la structure à variation chromatique dans le premier ou les premiers évidements, dans lequel la profondeur du premier profil d'évidement est de préférence la même que la profondeur du second profil d'évidement, et dans lequel la largeur du premier profil d'évidement est différente de la largeur du second profil d'évidement.

6. Procédé selon la revendication 4 ou la revendication 5, dans lequel une largeur des une ou plusieurs premières zones de plage est différente d'une largeur des une ou plusieurs secondes zones de plage, dans lequel le revêtement de la structure à variation chromatique est reçu sur les une ou plusieurs premières zones de plage de la première région et sur les une ou plusieurs secondes zones de plage de la seconde région de telle sorte qu'une épaisseur du revêtement de la structure à variation chromatique sur les une ou plusieurs zones de plage est différente d'une épaisseur du revêtement de la structure à variation chromatique sur les une ou plusieurs secondes zones de plage.

7. Procédé selon l'une quelconque des revendications précédentes, dans lequel l'application d'un revêtement de la structure à variation chromatique à la structure en relief comprend l'application du revêtement de la structure à variation chromatique au moyen d'un premier ensemble de conditions de traitement, et/ou comprend l'application du revêtement de la structure à variation chromatique de sorte à qu'il est sensiblement continu sur au moins la structure en relief.

8. Procédé selon l'une quelconque des revendications précédentes, dans lequel le premier ou les premiers évidements ont une première profondeur et comprenant l'application du revêtement de la structure à variation chromatique à une épaisseur qui est inférieure à la profondeur du premier ou des premiers évidements.

9. Procédé selon l'une quelconque des revendications précédentes, dans lequel le revêtement de la structure à variation chromatique comprend au moins une couche réfléchissante comprenant au moins un matériau partiellement réfléchissant, une couche d'espacement optique et une couche absorbante comprenant un matériau partiellement réfléchissant, dans lequel l'application de la structure à variation chromatique comprend de préférence, l'application de la couche réfléchissante, de la couche d'espacement optique et de la couche absorbante sur la structure en relief dans des étapes d'application distinctes, et/ou comprenant de préférence l'application de la couche d'espacement optique au moyen d'un processus de revêtement à l'état humide, tel que l'application de la couche d'espacement optique au moyen d'un processus à filière plate ou de rotogravure.

10. Procédé selon l'une quelconque des revendications précédentes, dans lequel l'épaisseur du revêtement de la structure à variation chromatique dans le premier ou les premiers évidements est telle que, lorsqu'il est vu en réflexion, le revêtement de la structure à variation chromatique génère une interférence constructive dans la lumière réfléchie uniquement à des longueurs d'onde inférieures à 400 nm.

11. Procédé selon l'une quelconque des revendications précédentes, dans lequel la pluralité de premiers évidements sont disposés conformément à une première structure de grille, dans lequel de préférence, le pas de la première structure de grille n'est pas inférieur à 1 µm, de préférence pas inférieur à 3 µm, et/ou dans lequel de préférence, le pas de la première structure de grille ne dépasse pas 50 µm, de préférence, ne dépasse pas 10 µm, et/ou dans lequel la pluralité de premiers évidements sont disposés conformément à une première structure de réseau, dans lequel de préférence, la première structure de réseau est une première structure de réseau à profil carré et/ou une première structure de réseau de diffraction, et dans lequel de préférence, le second ou les seconds évidements, le cas échéant, sont disposés conformément à une seconde structure de grille ou seconde structure de réseau, dans lequel de préférence en outre, la seconde structure de grille ou seconde structure de réseau est décalée angulairement par rapport à la première structure de grille ou la première structure de réseau.

12. Procédé selon l'une quelconque des revendications précédentes, dans lequel la structure en relief est une structure en relief diffractive, ou forme une structure en relief de lentille de Fresnel ou une structure à plaques zonales.

13. Procédé selon l'une quelconque des revendications précédentes, dans lequel le premier ou les premiers évidements ont un premier profil d'évidement ayant un premier rapport d'aspect défini comme une profondeur dudit premier profil d'évidement divisée par une largeur dudit premier profil d'évidement et dans lequel le premier rapport d'aspect a une valeur dans la plage de 0,02 à 0,3, de préférence, dans la plage de 0,1 à 0,25.

14. Procédé selon l'une quelconque des revendications précédentes, dans lequel chacun du premier ou des premiers évidements a une profondeur ne dépassant pas 50 µm, de préférence, ne dépassant pas 20 µm, plus préférablement, ne dépassant pas 10 µm, de manière préférée entre toutes, ne dépassant pas 5 µm, et/ou dans lequel chacun du premier ou des premiers évidements a une largeur ne dépassant pas 100 µm, de préférence, ne dépassant pas 50 µm, plus préférablement, ne dépassant pas 20 µm, de manière préférée entre toutes, ne dépassant pas 10 µm.

15. Dispositif de sécurité (1) comprenant :
un substrat (10) ayant une structure en relief (21) dans ou sur sa surface, la structure en relief étant dans une première région du substrat ;
la structure en relief dans la première région comportant un premier évidement ou une pluralité de premiers évidements (21) dans ou sur la surface du substrat, le premier ou les premiers évidements étant en retrait par rapport aux une ou plusieurs premières zones de plage (22) dans ou sur la surface du substrat ; et
un revêtement d'une structure à variation chromatique (30, 40, 50) sur la structure en relief dans le premier ou les premiers évidements sur les une ou plusieurs premières zones de plage ;
**caractérisé en ce qu'**une épaisseur (t) du revêtement de la structure à variation chromatique dans le premier ou les premiers évidements est supérieure ou inférieure à une épaisseur du revêtement de la structure à variation chromatique sur les une ou plusieurs premières zones de plage.
